(19)

**Europäisches Patentamt**

**European Patent Office**

**Office européen des brevets**

(11) **EP 3 133 107 A1**

(12) **EUROPEAN PATENT APPLICATION**

(43) Date of publication:
22.02.2017 Bulletin 2017/08

(51) Int Cl.:
*C08J 5/04* (2006.01)    *C08J 5/06* (2006.01)
*C08J 5/10* (2006.01)

(21) Application number: 15181364.9

(22) Date of filing: 18.08.2015

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Trinseo Europe GmbH**
**8810 Horgen (CH)**

(72) Inventors:
• **E R E J Lakeman, Pascal**
**4816AW Breda (NL)**

• **Van Riel, Norwin**
**4527EC Aardenburg (NL)**
• **De Winde, Pieter J.**
**4511AR Breskens (NL)**
• **Van Heur, Dagmar**
**8810 Horgen (CH)**
• **Van Daele, Ronald**
**9111 Belsele (BE)**

(74) Representative: **Hoffmann Eitle**
**Patent- und Rechtsanwälte PartmbB**
**Arabellastraße 30**
**81925 München (DE)**

(54) **POLYOLEFIN COMPOSITIONS CONTAINING HIGH CONCENTRATIONS OF REINFORCING FIBERS AND METHODS OF PREPARATION**

(57)    The present disclosure relates to polyolefin compositions containing high concentrations of reinforcing fibers. The present disclosure also relates to methods of preparing such compositions from water based polyolefin dispersions. The present disclosure also relates to the preparation of compositions containing a desired level of reinforcing fibers.

EP 3 133 107 A1

## Description

### FIELD

The present disclosure relates to polyolefin compositions containing high concentrations of reinforcing fibers. The present disclosure also relates to methods of preparing such compositions. The present disclosure also relates to the preparation of compositions containing a desired level of reinforcing fibers.

### BACKGROUND

Thermoplastic polymers are utilized to prepare molded parts in a variety of industries, for example automotive, toys, appliances, farm and lawn tractors and implements, medical devices, food service items, electronic equipment components, and the like. Thermoplastic polymers provide significant advantages for molded products, for example lighter weight than some alternative materials, design flexibility, controlled conductivity, and the like. Thermoplastic polymers exhibit flexibility in processing which facilitates flexibility in design and production of designed products. Thermoplastic polymers are used in some industries to reduce weight in the resulting products, for instance in automobiles. In some applications thermoplastic polymers present challenges, for example higher coefficient of liner expansion (CLTE), lower modulus, lower strengths, lower conductivity and higher brittleness than alternative materials. Fillers, such as fibers, can be added to improve CLTE, modulus and based on the nature and content of the fibers, conductivity. For this reason many thermoplastic polymers are reinforced with long fibers, for instance long glass fibers, to provide mechanical strength, improved CLTE and heat resistance. Exemplary structures prepared from long glass fiber thermoplastics useful in automobiles include bumper beam carriers, spare wheel wells, door sill panels, battery carriers, front end carriers, acoustic shielding, underbody panels, instrument panel carriers and hatchbacks.

Processes for preparing long fiber reinforced thermoplastics are known in the art. In some processes long fiber strands are drawn through a melt of thermoplastic polymers to wet the fibers with the thermoplastic resin. The problem with these processes is that the fiber levels are lower than desired for some applications or processes used to manufacture articles. Processes for preparing fiber reinforced thermoplastics have been developed wherein fibers are passed through dispersions of thermoplastic polymers in water containing a dispersion stabilization agent to wet the fibers with the thermoplastic resin and removing at least part of the water. Typically the formed structures are cut to form pellets for use in further processing. Exemplary references disclosing relevant processes include US 6,818,698; US 5,437,928; US 5,891,284; US 5,972,166; US 2008/118728; and US 7,803,865; all incorporated herein by reference in their entirety.

Many of these processes utilize materials in the dispersion that require neutralization of the carboxylic acid groups in the polymers utilized so as to stabilize the dispersions for the process to work in an optimal manner. Typically the neutralizer is a base, such as sodium hydroxide, potassium hydroxide and ammonium based compounds. Many of the neutralizers can introduce undesirable odors into the formed thermoplastic concentrates. Ultimate users of the concentrates desire low or no odor materials. In many of the disclosed processes wetting of the fibers by the thermoplastic polymers is problematic and the resulting dried pellets have fibers protruding such that the pellets appear to have a fuzz, fluff or angel hairs on their surface. Such protruding fibers can inhibit further processing and can impact the surface appearance of resulting structures. Due to these wetting problems and fiber protrusion these pellets may not be sufficiently robust to be transferred by certain highly efficient processes such as being conveyed by air means.

In many industrial processes the long fiber reinforced thermoplastic based structures are formed by blending concentrates of long glass fibers in thermoplastic polymers with pellets of unreinforced thermoplastic polymers, sometimes referred to as natural thermoplastic polymers. This is often colloquially referred to as a salt and pepper process. To enhance the productivity of some of these processes high flow rate natural thermoplastic polymers are utilized. In a number of these processes using polyolefins, polyolefins having high flow rates, prepared by breaking the polymer chains through a process of cracking, are utilized. The polyolefins are cracked by reacting them in the presence of peroxides to reduce the chain length and thus the viscosity. Cracked polyolefins contain high levels of volatile materials as a result of the process used to prepare the cracked polyolefins. The presence of volatile materials can present problems in downstream processing of the long fiber reinforced thermoplastic compositions.

In many structures only certain sections require higher strength materials. Structures prepared from a uniform composition of thermoplastic polymers and long fibers may contain more fibers than the structure requires which adds weight and cost which can be undesirable. Further there is always a demand for thermoplastic materials with higher moduli, tensile strengths, impact resistance and the like.

Thus, what is needed is are compositions of thermoplastic materials that exhibit one or more of the following characteristics; low fiber protrusion (reduced fluff, or angel hair formation); robust pellets that can be conveyed by efficient transfer processes, such as air conveying processes; low concentration of volatile neutralizers that introduce odors; low concentration of volatile products from cracking of thermoplastic polymers, pellets prepared from uncracked thermoplastics that can be efficiently processed; compositions that improve blending of natural thermoplastic polymers with long fiber concentrates or which eliminate the need for such blending; compositions that facilitate localized reinforcement of thermoplastic structures; and processes that facilitate the preparation of such compositions.

**SUMMARY**

The present disclosure relates to compositions comprising: a polymeric matrix comprising one or more polyolefins, one or more hindered phenol antioxidants, one or more phosphite antioxidants and one or more acid neutralizers; one or more of bundles of fibers; wherein the bundles of fibers are disposed within the polymeric matrix. Disposed about the bundles of fibers and infused between the fibers is the polymeric matrix in some embodiments. In some embodiments the acid neutralizer comprises one or more volatile nitrogen containing compounds. In some embodiments the polymeric matrix further includes one or more thioester antioxidants. In some embodiments the polymeric matrix further includes one or more polyolefins with maleic anhydride, or a hydrolysis product thereof, grafted to the backbone. In some embodiments the polymeric matrix comprises one or more copolymers of polypropylene and an alpha olefin. In some embodiments the polymeric matrix comprises one or more polyolefin copolymers having pendant carboxylic acid groups, for instance copolymers of ethylene acrylic acid. In some embodiments the polymeric matrix comprises one or more high melt flow rate polypropylene homopolymers. In some embodiments the polymeric matrix includes one or more polyolefins with maleic anhydride, or a hydrolysis product thereof, grafted to the backbone; one or more copolymers of polypropylene and an alpha olefin; one or more polyolefin copolymers having pendant carboxylic acid groups; and one or more high melt flow rate polypropylene homopolymers. In some embodiments the one or more bundles of fibers having a polymeric matrix disposed about the bundles have coated about polymeric matrix a thermoplastic composition. In some embodiments the compositions comprise a plurality of bundles of fibers wherein the bundles of fibers are oriented in one direction and are bonded together such that bonded together bundles exhibit a consistent shape transverse to the direction of orientation.

The present disclosure also relates to methods comprising a) passing one or more bundles of fibers, optionally having a sizing coated on the surface, through a dispersion in water of a composition comprising one or more polyolefins, one or more hindered phenol antioxidants, one or more phosphite antioxidants and one or more acid neutralizers so as to form a polymeric matrix and to dispose the bundles of fibers within the polymeric matrix ; b) passing the polymeric matrix with the bundles of fibers disposed therein through an oven to volatilize away the volatile components of the dispersion; and c) cutting the bundle of fibers into a desired length. In some embodiments the methods can be performed such that after exiting the oven a thermoplastic composition is coated on the polymeric matrix in which the bundle of fibers is disposed; and the bundle or fibers is then passed through a another oven or oven section to bond the thermoplastic composition to the polymeric matrix; and the bundle of fibers is cut into the desired length. In some embodiments the polymeric matrix is dispersed and/or infused in the fiber bundle. In some embodiments the methods the can be performed such that a plurality of bundles is passed through a die as they exit the dispersion to shape the plurality of bundles in the direction transverse to the orientation of the fibers and the bundles of fibers are bonded together in the formed shape in the oven. In some embodiments the methods the can be performed such that after exiting the oven a thermoplastic composition is coated on the polymeric matrix disposed on the plurality of bundles of fibers; the plurality of bundles of fibers is then passed through another oven to bond the thermoplastic composition to the polymeric matrix; and the plurality of bundle of fibers is cut into the desired length. In some embodiments the methods the can be performed such that the dispersion further includes one or more polyolefins with maleic anhydride grafted to the backbone. In some embodiments the methods the can be performed such that the bundles of fibers are passed through a second dispersion comprising water and one or more polyolefins with maleic anhydride, or a hydrolysis product thereof, grafted to the backbone, wherein the bundles can be passed through the dispersion and the second dispersion in any order. The compositions may contain more than one types of fiber which allows tailoring of the properties of structures prepared from the compositions for a variety of needs.

The compositions of the disclosure can be prepared in the form of pellets, elongated structures of desired cross-sectional structure, such as films, tapes, shaped rods, ducts, tubes, and the like. In some embodiments the fibers extend completely through the longest dimension of the formed structures. Typically this longest direction is the direction of passing the fibers through the bath.

Some of the compositions disclosed herein exhibit low fluff, fuzz or angel hair structures. Some of the compositions disclosed herein exhibit low volatile component content, such as one or more neutralization agents or polymer cracking catalysts or byproducts. Compositions containing thermoplastic polymer bonded to the polymeric matrix about the fibers can reduce the amount of natural polymer required for dilution to the desired fiber content or prevent the need for blending the concentrate with natural polymers. Some of the structures than can be prepared can be used for localized reinforcement. Some of the composition disclosed exhibit improved bonding of the fibers to the thermoplastic polymer which enhances the strength and modulus of the fiber reinforced thermoplastic polymers.

**DESCRIPTION OF THE DRAWINGS**

Figure 1 is a depiction of one layout of equipment used in a process disclosed herein.
Figure 2 is a depiction of a second layout of equipment used in a process disclosed herein.
Figure 3 is a depiction of a process for blending pellets of a polymeric matrix containing bundles of fibers with a natural polyolefin.
Figure 4 is a depiction of a process using a polymer melt to coat the fiber bundles.
Figure 5 is a micrograph of the cross-section of these fiber bundles.
Figure 6 is a graph of Melt Flow rate of the matrix blend against weight ratio of 44 melt flow rate polypropylene in the blend.
Figure 7 shows a graph of ratio of high flow polypropylene to glass and dispersion coated thereon, (weight ratio).
Figure 8 is a graph of Creep test data with varying levels of hydrotalcite

**DETAILED DESCRIPTION**

The explanations and illustrations presented herein are intended to acquaint others skilled in the art with the invention, its principles, and its practical application. Accordingly, the specific embodiments of the present invention as set forth are not intended as being exhaustive or limiting of the invention. The scope of the invention should be determined with reference to the appended claims, along with the full scope of equivalents to which such claims are entitled. The disclosures of all articles and references, including patent applications and publications, are incorporated by reference for all purposes. Other combinations are also possible as will be gleaned from the following claims, which are also hereby incorporated by reference into this written description.

The disclosure relates to thermoplastic compositions comprising one or more polyolefins containing long fibers and processes for their preparation. The compositions are generally prepared by passing one or more bundles of fibers through an aqueous bath of one or more polyolefins, one or more hindered phenol antioxidants, one or more phosphite antioxidants and one or more acid neutralizers; removing the water and fusing the one or more polyolefins, one or more hindered phenol antioxidants, one or more phosphite antioxidants and one or more acid neutralizers to the fibers to form a polymeric matrix which is infused between the fibers of the bundle and is coated about the bundles of fiber; optionally shaping the one or more bundles of fibers and the polymeric matrix into a desired cross-sectional shape; and cutting the prepared structures into a desired length, typically along the direction the fibers are passed through the bath.

The compositions disclosed may further comprise any one or more of the features described in this specification in any combination, including the preferences and examples listed in this specification, and includes the following features: the acid neutralizer comprises one or more volatile nitrogen containing compounds; the polymeric matrix includes one or more thioester antioxidants; the polymeric matrix includes one or more polyolefins with maleic anhydride or a hydrolysis product thereof grafted to the backbone; the one or more polyolefins with maleic anhydride or a hydrolysis product thereof grafted to the backbone exhibits a weight average molecular weight of about 20,000 to about 40,000 daltons; the one or more polyolefins with maleic anhydride or a hydrolysis product thereof grafted to the backbone contains about 0.5 to about 3.5 percent by weight of maleic anhydride or a hydrolysis product thereof; the polymeric matrix contains from about 5 to about 15 percent by weight of one or more polyolefins with maleic anhydride or a hydrolysis product thereof grafted to the backbone; the polyolefin of the polymeric matrix comprises polyethylene, polypropylene, copolymers of ethylene and propylene, or mixtures thereof which may further contain other monomers that polymerize by free radical polymerization; the polymeric matrix further comprises additives and other functional ingredients to improve processing and product performance; a plurality of the bundles of fibers are oriented in one direction and are bonded together such that bonded together bundles exhibit a consistent shape transverse to the direction of orientation; the composition comprises about 20 to about 95 percent by weight of fibers; the composition comprises about 75 to about 91 percent by weight of fibers; the polymeric matrix comprises: from about 95.7 to about 99.96 percent by weight of one or more polyolefins; from about 0.01 to about 1.0 percent by weight of one or more hindered phenol antioxidants; from about 0.01 to about 0.1 percent by weight of one or more phosphite antioxidants; from about 0.01 to about 0.2 percent by weight of one or more thioester antioxidants; and from about 0.01 to about 3.0 percent by weight of one or more acid neutralizers; the one or more bundles of fibers having a polymeric matrix disposed about the bundles have coated about polymeric matrix a thermoplastic composition; the thermoplastic composition coated about the polymeric matrix comprises a polyolefin, for instance a polypropylene, having a melt flow rate of 70 or greater; the polyolefin having a melt flow rate of 70 or greater is uncracked or prepared using metallocene catalysts; the composition comprises: from about 30 to 90 percent by weight of the polymeric matrix having disposed therein one or more bundles of fibers which comprises from about 70 to about 91 percent by weight of fibers and from about 9 to about 30 percent by weight of the polymeric matrix based on the weight of the polymeric matrix and the bundles of fibers, and from about 10 to about 70 percent by weight of thermoplastic composition disposed about the polymeric matrix and the bundles of fibers wherein the percentages are based on the weight of the polymeric matrix, the bundles of fibers and the thermoplastic composition; and the polymeric matrix further includes carbon black.

The methods disclosed may further comprise any one or more of the features described in this specification in any combination, including the preferences and examples listed in this specification, and includes the following features: a) passing one or more bundles of fibers, optionally having a sizing coated on the surface, through a dispersion in water of a composition comprising one or more polyolefins, one or more hindered phenol antioxidants, one or more phosphite antioxidants and one or more acid neutralizers so as to form a polymeric matrix of the composition about the bundles of fibers; b) passing the polymeric matrix with the bundles of fibers disposed therein through an oven to volatilize away the volatile components of the dispersion; and c) cutting the bundles of fibers into a desired length; after exiting the oven a thermoplastic composition is coated on the polymeric matrix disposed on the bundles of fibers; the bundles of fibers are then passed through another oven or oven section to bond the thermoplastic matrix to the polymeric matrix, and the bundles of fibers are cut into the desired length; the one or more bundles of fibers comprise a plurality of bundles of fibers which is passed through a die as they exit the dispersion to shape the plurality of bundles in the direction transverse to the orientation of the fibers and the bundles of fibers are bonded together in the formed shape in the oven; after exiting the oven a thermoplastic composition is coated on the polymeric matrix disposed on the plurality of bundles of fibers; the plurality of bundles of fibers is then passed through another oven or oven section to bond the thermoplastic matrix to the polymeric matrix; and the plurality of bundle of fibers is cut into the desired length; the dispersion further includes one or more polyolefins with maleic anhydride or a hydrolysis product thereof grafted to the backbone; and the bundles of fibers are passed through a second dispersion comprising water and one or more polyolefins with maleic anhydride or a hydrolysis product thereof grafted to the backbone, wherein the bundles can be passed through the dispersion and the second dispersion in any order.

One or more as used herein means that at least one, or more than one, of the recited components may be used as disclosed. Heteroatom means nitrogen, oxygen, sulfur and phosphorus, more preferred heteroatoms include nitrogen and oxygen. Hydrocarbyl refers to a group containing one or more carbon atom backbones and hydrogen atoms, which may optionally contain one or more heteroatoms. Where the hydrocarbyl group contains heteroatoms, the heteroatoms may form one or more functional groups well known to one skilled in the art. Hydrocarbyl groups may contain cycloaliphatic, aliphatic, aromatic or any combination of such segments. The aliphatic segments can be straight or branched. The aliphatic and cycloaliphatic segments may include one or more double and/or triple bonds. Included in hydrocarbyl groups are alkyl, alkenyl, alkynyl, aryl, cycloalkyl, cycloalkenyl, alkaryl and aralkyl groups. Cycloaliphatic groups may contain both cyclic portions and noncyclic portions. Hydrocarbylene means a hydrocarbyl group or any of the described subsets having more than one valence, such as alkylene, alkenylene, alkynylene, arylene, cycloalkylene, cycloalkenylene, alkarylene and aralkylene. As used herein percent by weight or parts by weight refer to, or are based on, the weight or the curable compositions unless otherwise specified.

The polymeric matrix comprises one or more polyolefins. A polyolefin is a polymer prepared by polymerization of unsaturated groups of one or more compounds having a straight or branched hydrocarbon chain. Preferred compounds having a straight or branched hydrocarbon chain comprise ethylene, propylene, 1-butene, 3-methyl-1-butene, 4-methyl-l-pentene, 3-methyl-l-pentene, 1-heptene, 1-hexene, 1-octene, 1-decene, and 1-dodecene. The polyolefins useful can be homopolymers or copolymers of more than one compounds having a straight or branched hydrocarbon chain. In general any polyolefin that can molded may be utilized in the composition. The polyolefins may comprise elastomers and blends of olefin polymers. Exemplary polyolefins include polyethylene, polypropylene, poly-1-butene, poly-3-methyl-1-butene, poly-3-methyl-1-pentene, poly-4-methyl-l-pentene, ethylene-propylene copolymers, ethylene-1-butene copolymers, and propylene-1-butene copolymers copolymers (including elastomers) of an alpha-olefin with a conjugated or non-conjugated diene, as typically represented by ethylene-butadiene copolymers and ethylene-ethylidene norbornene copolymers; and polyolefins (including elastomers) such as copolymers of two or more alpha-olefins with a conjugated or non-conjugated diene, as typically represented by ethylene-propylene-butadiene copolymers, ethylene-propylenedicyclopentadiene copolymers, ethylene-propylene-1,5-hexadiene copolymers, and ethylene-propylene-ethylidene norbornene copolymers; ethylene-vinyl compound copolymers such as ethylene-vinyl acetate copolymers, ethylene-vinyl alcohol copolymers, ethylene-vinyl chloride copolymers, ethylene acrylic acid or ethylene-(meth)acrylic acid copolymers, and ethylene-s (meth)acrylate copolymers. Preferred exemplary polyolefins include ethylene-based polymers, propylene-based polymers, propylene-ethylene copolymers, ethylene-alpha olefin copolymers or propylene-alpha olefin copolymers, ethylene-propylene-diene terpolymers. Preferred olefinic polymers include homogeneous polymers, as described in U.S. Pat. No. 3,645,992 issued to Elston; high density polyethylene (HDPE), as described in U.S. Pat. No. 4,076,698 issued to Anderson; heterogeneously branched linear low density polyethylene (LLDPE); heterogeneously branched ultra-low linear density polyethylene (ULDPE); homogeneously branched, linear ethylene/alpha-olefin copolymers; homogeneously branched, substantially linear ethylene/alpha-olefin polymers, which can be prepared, for example, by processes disclosed in U.S. Pat. Nos. 5,272,236 and 5,278,272, the disclosures of which are incorporated herein by reference; and high pressure, free radical polymerized ethylene polymers and copolymers such as low density polyethylene (LDPE) or ethylene vinyl acetate polymers (EVA). In some embodiments, the polymer is a propylene-based copolymer or interpolymer. In some particular embodiments, the propylene-based copolymer or interpolymer is characterized as having substantially isotactic propylene sequences. The term "substantially isotactic propylene sequences" and similar terms mean that the sequences have an isotactic triad (mm) measured by 13 C NMR of greater than about 0.85 in one embodiment; greater than about 0.90 in another embodiment; greater than about 0.92 in another embodiment; and greater than about 0.93 in yet another embodiment. Isotactic triads are well-known in the art and are described in, for example, U.S. Pat. No. 5,504,172 and WO 00/01745, which refer to the isotactic sequence in terms of a triad unit in the copolymer molecular chain determined by 13 C NMR spectra. One embodiment of the propylene-based polymer is a propylene-ethylene copolymer or interpolymer, where ethylene may be present in an amount from about 5% to about 25% by weight. In some embodiments, the propylene-rich alpha-olefin interpolymer is characterized as having an isotactic triad (mm) measured by 13 C NMR of greater than about 0.85. Some such propylene-rich alpha-olefin interpolymers may have from 5 to 25% by weight of ethylene-derived units and 95 to 75% by weight of propylene-derived units. Additionally, some propylene-rich alpha-olefin interpolymers have (a) a melting point of less than 90 °C; (b) a relationship of elasticity to 500% tensile modulus such that the elasticity is less than or equal to 0.935M+12, where elasticity is in percent and M is the 500% tensile modulus in MPa; and (c) a relationship of flexural modulus to 500% tensile modulus such that flexural modulus is less than or equal to $4.2e^{\circ'} 27M +50$, where flexural modulus is in MPa and M is the 500% tensile modulus in MPa. In some embodiments, the propylene rich alpha-olefin interpolymer comprises 6 to 20% by weight of ethylene- derived units and 94 to 80% by weight of propylene-derived units. In other embodiments, polymers may comprise 8 to 20% by weight of ethylene-derived units and 92 to 80% by weight of propylene-derived units. In still other embodiments, polymers may comprise 10 to 20% by weight of ethylene- derived units and 90 to 80% by weight of propylene-derived units.

In one particular embodiment, the thermoplastic resin may comprise an alpha-olefin interpolymer of ethylene with a comonomer comprising an alkene, such as 1- octene. The ethylene and octene copolymer may be present alone or in combination with another polyolefin resin. When present together, the weight ratio between the ethylene and octene copolymer and another polymer may range from about 1:10 to about 10:1, such as from about 3:2 to about 2:3. The polymeric resin, such as the ethylene-octene copolymer, may have a crystallinity of less than about 50%, such as less than about 25%. In some embodiments, the crystallinity of the polymer may range from 5 to 35 percent. Embodiments disclosed herein may also include a polymeric component that may include at least one multi-block olefin interpolymer. Suitable multi-block olefin interpolymers may include those described in U.S. 8,916,640, for example. The term "multi-block copolymer" or refers to a polymer comprising two or more chemically distinct regions or segments (referred to as "blocks") preferably joined in a linear manner, that is, a polymer comprising chemically differentiated units which are joined end-to-end with respect to polymerized ethylenic functionality, rather than in pendent or grafted fashion. In certain embodiments, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. The multi-block copolymers are characterized by unique distributions of polydispersity index (PDI or M w /M n), block length distribution, and/or block number distribution due to the unique process making of the copolymers. More specifically, when produced in a continuous process, embodiments of the polymers may possess a PDI ranging from about 1.7 to about 8; from about 1.7 to about 3.5 in other embodiments; from about 1.7 to about 2.5 in other embodiments; and from about 1.8 to about 2.5 or from about 1.8 to about 2.1 in yet other embodiments. When produced in a batch or semi-batch process, embodiments of the polymers may possess a PDI ranging from about 1.0 to about 2.9; from about 1.3 to about 2.5 in other embodiments; from about 1.4 to about 2.0 in other embodiments; and from about 1.4 to about 1.8 in yet other embodiments. One example of the multi-block olefin interpolymer is an ethylene/α-olefm block interpolymer. Another example of the multi-block olefin interpolymer is a propylene/α-olefin interpolymer. The following description focuses on the interpolymer as having ethylene as the majority monomer, but applies in a similar fashion to propylene-based multi-block interpolymers with regard to general polymer characteristics. The ethylene/α-olefin multi-block copolymers may comprise ethylene and one or more co-polymerizable α-olefin comonomers in polymerized form, characterized by multiple (i.e., two or more) blocks or segments of two or more polymerized monomer units differing in chemical or physical properties (block interpolymer). In some embodiments, the copolymer is a multi-block interpolymer. In some embodiments, the multi-block interpolymer may be represented by the following formula: (AB) n where n is at least 1, and in various embodiments n is an integer greater than 1, such as 2 to 100, or higher; "A" represents a hard block or segment; and "B" represents a soft block or segment. Preferably, A's and B's are linked in a linear fashion, not in a branched or a star fashion. "Hard" segments refer to blocks of polymerized units in which ethylene is present in an amount greater than 95 weight percent in some embodiments, and in other embodiments greater than 98 weight percent. In other words, the comonomer content in the hard segments is less than 5 weight percent in some embodiments, and in other embodiments, less than 2 weight percent of the total weight of the hard segments. In some embodiments, the hard segments comprise all or substantially all ethylene. "Soft" segments, on the other hand, refer to blocks of polymerized units in which the comonomer content is greater than 5 weight percent of the total weight of the soft segments in some embodiments, greater than 8 weight percent, greater than 10 weight percent, or greater than 15 weight percent in various other embodiments. In some embodiments, the comonomer content in the soft segments may be greater than 20 weight percent, greater than 25 weight percent, greater than 30 weight percent, greater than 35 weight percent, greater than 40 weight percent, greater than 45 weight percent, greater than 50 weight percent, or greater than 60 weight percent in various other embodiments. In other embodiments, the block copolymers do not have a third block. In still other embodiments, neither block A nor block B comprises two or more segments (or sub-blocks), such as a tip segment.

One class of desirable polymers that may be used in accordance with embodiments disclosed herein includes elastomeric interpolymers of ethylene, a $C_{3-20}$ $\alpha$-olefin, especially propylene, and optionally one or more diene monomers. Preferred $\alpha$-olefins for use in this embodiment are designated by the formula $CH_2=CHR^*$, where $R^*$ is a linear or branched alkyl group of from 1 to 12 carbon atoms. Examples of suitable $\alpha$-olefins include, but are not limited to, propylene, isobutylene, 1-butene, 1-pentene, 1-hexene, 4-methyl-I-pentene, and 1-octene. A particularly preferred $\alpha$-olefin is propylene. The propylene-based polymers are generally referred to in the art as EP or EPDM polymers. Suitable dienes for use in preparing such polymers, especially multi-block EPDM type polymers include conjugated or non-conjugated, straight or branched chain-, cyclic- or polycyclic-dienes comprising from 4 to 20 carbons. Preferred dienes include 1,4-pentadiene, 1,4- hexadiene, 5-ethylidene-2-norbornene, dicyclopentadiene, cyclohexa diene, and 5- butylidene-2-norbornene. A particularly preferred diene is 5-ethylidene-2- norbornene.

The polyolefins may be functionalized by incorporating at least one functional group in its polymer structure. Exemplary functional groups may include carboxylic acids or structures that form carboxylic acids upon hydrolysis in water, for example maleic anhydride. ethylenically unsaturated compounds that can introduce such functional groups into the backbone of the polyolefins include ethylenically unsaturated mono- and di-functional carboxylic acids, ethylenically unsaturated mono- and di-functional carboxylic acid anhydrides, salts thereof and esters thereof. Such functional groups may be grafted to an olefin polymer, or it may be copolymerized with an olefin, such as ethylene or propylene, and an optional additional comonomer to form an interpolymer of olefin, the functional comonomer and optionally other comonomer(s). Means for grafting functional groups onto polyolefins are described for example in U.S. Patents Nos. 4,762,890, 4,927,888, and 4,950,541, the disclosures of which are incorporated herein by reference in their entirety. One particularly useful functional group is maleic anhydride. The amount of the functional group present in the functional polymer may vary and is chosen to enhance the final properties of the composition of the invention. The functional group may be present in an amount of about 0.25 weight percent or more in some embodiments; about 5 weight percent or more in other embodiments; and about 7 weight percent or more in yet other embodiments based on the weight of the polyolefins present. The functional group may be present in an amount of about 40 weight percent or less in some embodiments; about 30 weight percent or less in other embodiments; and about 25 weight percent or less in yet other embodiments based on the weight of the polyolefins present.

In some embodiments, the polyolefins comprise one or more non-polar polyolefins. In some embodiments, the polyolefins comprise one or more non-polar polyolefins and one or more functionalized polyolefins. Preferred functionalized polyolefins contain carboxylic acids, for example ethylene acrylic acid, or groups which form carboxylic acids upon hydrolysis of functional groups present, for example maleic anhydride groups. In some embodiments the polyolefins comprise one or more non-polar polyolefins, optionally one or more functional polyolefins, and one or more impact polyolefins. An impact polyolefin is a polyolefin having its backbone modified to improve the elasticity of the polyolefin so as to improve the impact resistance of compositions containing the impact polyolefin. Impact polyolefins comprise one or more of the following polyolefins: copolymers of an alpha-olefin with a conjugated or non-conjugated diene, as typically represented by ethylene-butadiene copolymer and ethylene-ethylidene norbornene copolymer; copolymers of two or more alpha-olefins with a conjugated or non-conjugated diene, as typically represented by ethylene-propylene-butadiene copolymer, alpha-olefin interpolymer of ethylene with a comonomer comprising an alkene, such as 1- octene; multi-block olefin interpolymers; with interpolymers of ethylene, a $C_3 - C_{20}$ $\alpha$-olefin, especially propylene, and optionally one or more diene monomers being preferred.

Generally the polyolefins useful in the composition exhibit any molecular weight that provides a moldable composition. Preferably the polyolefins exhibit a weight average molecular weight, as measured by GPC using a Agilent PLgel Olexis column and polystyrene standards, as described in Analysis of Polyolefins by GPC/;SEC Application Compendium, by Greg Saunders and Ben MacCreath of Agilent Technologies, Inc" 2011 (available at www.agilent.com/chem/gpcsec), of about 10,000 daltons or greater, more preferably about 30,000 daltons or greater, even more preferably about 50,000 daltons or greater and most preferably about 100,000 daltons or greater. Preferably the polyolefins exhibit a weight average molecular weight as measured by GPC of about 400,000 daltons or less, more preferably about 350,000 daltons or less, even more preferably about 300,000 daltons or less and most preferably about 260,000 daltons or less. Preferably the non-polar polyolefins exhibit a weight average molecular weight as measured by GPC of about 10,000 daltons or greater, more preferably about 30,000 daltons or greater and most preferably about 100,000 daltons or greater. Preferably the non-polar polyolefins exhibit a weight average molecular weight of about 400,000 daltons or less, more preferably about 350,000 daltons or less, even more preferably about 300,000 daltons or less, even more preferably about 260,000 daltons or less and most preferably about 240,000 daltons or less. Preferably the functionalized polyolefins exhibit a weight average molecular weight as measured by GPC of about 2,000 daltons or greater, more preferably about 3,000 daltons or greater, even more preferably about 5,000 daltons or greater and most preferably about 10,000 daltons or greater. Preferably the functionalized polyolefins exhibit a weight average molecular weight as measured by GPC of about 200,000 daltons or less, more preferably about 160,000 daltons or less, even more preferably about 130,000 daltons or less and most preferably about 100,000 daltons or less.

Generally the polyolefins are present in the composition of polymeric matrix and fibers in an amount of about 4 percent by weight or greater based on the weight of the polymeric matrix and fibers, more preferably about 8 percent by weight or greater and most preferably about 10 percent by weight or greater. Generally the polyolefins are present in the composition of polymeric matrix and fibers in an amount of about 30 percent by weight or less based on the weight of the polymeric matrix and fibers, more preferably about 25 percent by weight or less and most preferably about 20 percent by weight or less. Where there is a mixture of non-polar polyolefins and functional polyolefins, the non-polar polyolefins are present in the composition of polymeric matrix and fibers in an amount of about 2 percent by weight or greater based on the weight of the polymeric matrix and fibers, more preferably about 4 percent by weight or greater and most preferably about 6 percent by weight or greater. Where there is a mixture of non-polar polyolefins and functional polyolefins, the non-polar polyolefins are present in the composition of polymeric matrix and fibers in an amount of about 15 percent by weight or less based on the weight of the polymeric matrix and fibers, more preferably about 12 percent by weight or less and most preferably about 10 percent by weight or less. Where there is a mixture of non-polar polyolefins and functional polyolefins, the functional polyolefins are present in the composition of polymeric matrix and fibers in an amount of about 2 percent by weight or greater based on the weight of the polymeric matrix and fibers, more preferably about 4 percent by weight or greater and most preferably about 6 percent by weight or greater. Where there is a mixture of non-polar polyolefins and functional polyolefins, the functional polyolefins are present in the composition of polymeric matrix and fibers in an amount of about 15 percent by weight or less based on the weight of the polymeric matrix and fibers, more preferably about 12 percent by weight or less and most preferably about 10 percent by weight or less. Preferably the ratio of non-polar to functional polyolefins in the composition is about 1:5 or greater, more preferably about 1:2 or greater and most preferably about 2:3 or greater. Preferably the ratio of non-polar to functional polyolefins in the composition is about 5:1 or less, more preferably about 5:2 or less and most preferably about 5:3 or less. Where there is a mixture of non-polar polyolefins and impact polyolefins, the impact polyolefins are present in the composition of polymeric matrix and fibers in an amount of about 0.5 percent by weight or greater based on the weight of the polymeric matrix and fibers, more preferably about 1.0 percent by weight or greater and most preferably about 2 percent by weight or greater. Where there is a mixture of non-polar polyolefins and impact polyolefins, the impact polyolefins are present in the composition of polymeric matrix and fibers in an amount of about 10 percent by weight or less based on the weight of the polymeric matrix and fibers, more preferably about 8 percent by weight or less and most preferably about 6 percent by weight or less.

The polymeric matrix further comprises one or more hindered phenol antioxidants which function by scavenging peroxy radical intermediates in the polymeric matrix. The one or more hindered phenol antioxidants are present in sufficient amount to scavenge peroxy radical intermediates in the polymeric matrix. Any hindered phenol antioxidant that performs the recited function may be used in the polymeric matrix. Exempary hindered phenol antioxidants include compounds with one or more mono-hydroxyphenyl (i.e. "phenol") moieties and one or more aliphatic or aromatic substituents wherein each mono-hydroxyphenyl moiety contains one or preferably two aliphatic substituents, e.g. methyl, tert. -butyl, tert.-pentyl, at least one thereof being located in ortho-position relative to the phenolic OH. Specific hindered phenol antioxidants include: alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-($\alpha$-methylcyclohexyl)-4,6-dimethylphenol, 2,6-dioctadecyl-4-methylphenol, 2,4,6-tricyclohexylphenol, 2,6-di-tert-butyl-4-methoxymethylphenol, 2,6-di-nonyl-4-methylphenol, 2,4'-dimethyl-6-(1'-methyl undec-1'-yl)phenol, 2,4-dimethyl-6-(1'-methylheptadec-1'-yl)phenol, 2,4-dimethyl-6-(1'-methyltridec-1'-yl)phenol and mixtures therof; alkylthiomethylphenols, for example 2,4-di octylthiomethyl-6-tert-butylphenol, 2,4-dioctylthiomethyl-6-methylphenol, 2,4-dioctyl thio methyl-6-ethylphenol, 2,6-di-dodecylthiomethyl-4-nonylphenol; Hydroquinones and alkyl-ated hydroquinones, for example 2,6-di-tert-butyl-4-methoxyphenol, 2,5-di-tert-butyl hydroquinone, 2,5-di-tert-amylhydroquinone, 2,6-diphenyl-4-octadecyloxyphenol, 2,6-di-tert-butylhydroquinone, 2,5-di-tert-butyl4-hydroxyanisole, 3,5-di-tert-butyl-4-hy-droxy anisole, 3,5-di-tert-butyl-4-hydroxyphenylstearate, bis-(3,5-di-tert-butyl-4-hydroxy phenyl) adipate; Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis-(3,6-di-sec-amylphenol), 4,4'-bis-(2,6-dimethyl-4-hydroxyphenyl)disulfide; alkylidenebisphenols, for example 2,2'-methylene bis (6-tert-butyl-4-methylphenol), 2,2'-methylenebis(6-tert-butyl-4-ethylphenol), 2,2'-methyl-enebis 4-methyl-6-($\alpha$-methylcyclohexyl)phenol!, 2,2'-methylenebis(4-methyl-6-cyclohexyl phenol), 2,2'-methylenebis(6-nonyl-4-methylphenol), 2,2'-methylenebis(4,6-di-tert-butyl phenol), 2,2'-ethylidenebis(4,6-di-tert-butylphenol), 2,2'-ethylidenebis(6-tert-butyl-4-isobutyl phenol), 2,2'-methylenebis 6-($\alpha$-methylbenzyl)-4-nonylphenol!, 2,2'-methylenebis 6-($\alpha,\alpha$-dimethylbenzyl)-4-nonylphenol!, 4,4'-methylenebis(2,6-di-tert-butyl phenol), 4,4'-methylenebis(6-tert-butyl-2-methylphenol), 1,1-bis(5-tert-butyl-4-hydroxy-2-methyl phenyl)butane, 2,6-bis(3-tert-butyl-5-methyl-2-hydroxybenzyl)-4-methylphenol, 1,1,3-tris (5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis 3,3-bis(3'-tert-butyl-4'-hydroxy phenyl)butyrate!, bis(3-tert-butyl-4-hydroxy-5-methyl-phenyl)dicyclopentadiene, bis 2-(3'-tert-butyl-2'-hydroxy-5'-methylbenzyl)-6-tert-butyl-4-methylphen yl!terephthalate, 1,1-bis-(3,5-dimethyl-2-hydroxy-phenyl)butane, 2,2-bis-(3,5-di-tert-butyl-4-hydroxyphenyl) pro pane, 2,2-bis-(5-tert-butyl-4-hydroxy2-methylphenyl)-4-n-dodecylmercaptobutane, and 1,1,5,5-tetra-(5-tert-butyl-4-hydroxy2-methylphenyl)pentane; 3,4-Dihydro-2,5,7,8-tetra methyl-2-(4,8,12-trimethyltridecyl)-2H-1-benzopyran-6-ol (Vitamin E). A particularly preferred hindered phenol antioxidant is 3,4-Dihydro-2,5,7,8-tetramethyl-2-(4,8,12-trimethyltridecyl)-2H-1-benzopyran-6-ol (Vitamin E). In some embodiments the presence of 3,4-Dihydro-2,5,7,8-tetramethyl-2-(4,8,12-trimethyltridecyl)-2H-1 -benzo pyran-6-ol (Vitamin E) improves the creep strength of the polymer matrix coated and infused bundles of fibers. Preferably, the hindered phenol antioxidants are present in an amount of about 0.01 percent by weight or greater based on the weight of the polymeric matrix, more preferably about 0.1 percent by weight or greater and most preferably about 0.2 percent by weight or greater. Preferably, the one or more hindered phenol antioxidants are present in an amount of about 2 percent by weight or less based on the weight of the polymeric matrix, more preferably about 1.0 percent by weight or less and most preferably about 0.8 percent by weight or less.

The polymeric matrices may further comprise one or more phosphite antioxidants. Any phosphite antioxidant that performs the function of stabilizing the composition against oxidation may be used. Exemplary phosphites include triphenyl phosphite, diphenylalkyl phosphites, phenyldialkyl phosphites, tris-(nonylphenyl)-phosphite, trilauryl phosphite, trioctadecyl phosphite, distearyl-pentaerythrite diphosphate, tris-(2,4-di-tert-butylphenyl)-phosphite, diisodecylpentaerythrite-diphosphite, bis-(2,4-di-tert-butylphenyl)-pentaerythrite diphos- phate, bis-(2,6-di-tert-butyl-4-methyl-phenyl)-pentaerythrite diphosphate, bis-isodecyloxy-pentaerythrite diphosphate, bis-(2,4-di-tert-butyl-6-methylphenyl)-pentaerythrite diphos-phate, bis-(2,4,6-tri-tert-butylphenyl)-pentaerythrite diphosphate, tristearyl-sorbit-triphos-phite, tetrakis-(2,4-di-tert-butyl-phenyl)-4,4'-biphenylene-diphosphonite, 6-isooctyloxy-2,4,8,10-tetra-tert-butyl-12H-dibenz[d,g]-1,3,2-dioxaphosphocine, 6-fluoro-2,4,8,1,0-tetra-tert-butyl-12-methyl-dibenz [d,g]-1,3,2-dioxaphosphocine, bis-(2,4-di-tert-butyl-6-methylphenyl)-methyl phosphite, bis-(2,4-di-tert-butyl-6-methylphenyl)-ethyl phos-phitebis-(2,4-dicumylphenyl) penta erythritol diphosphite (DOVERPHOS™ S-9228) tris-(2,4-di-t-butylphenyl) phosphite (DOVERPHOS™ S-480), distearyl pentaerythritol diphosphite (DOVERPHOS™ S-680), trisnonylphenyl phosphite (DOVERPHOS™ 4), phenyl diisodecyl phosphite (DOVERPHOS™ 7), diphenyl isodecyl phosphite (DOVERPHOS™ 8), triphenyl phosphite (DOVERPHOS™ 10), trilauryl phosphite (DOVERPHOS™ 53), alkyl (C12-C15) bisphenol A phosphite (DOVERPHOS™ 613), alkyl (C10) bisphenol A phosphite (DOVERPHOS™ 675), bis-(2,4-di-t-butylphenyl) pentaerythritol diphosphite (ULTRANOX™ 626), 2-butyl-2-ethyl-1,3-propanediol 2,4,6-tri-t-butylphenol phosphite (ULTRANOX™ 641), bis-(2,6-di-t-butyl-4-methylphenyl) pentaerythritol diphosphite (PEP 36), tetrakis-(2,4-di-t-butylphenyl) 4,4'-diphenylene diphosphonite (P-EPQ), 2,2'-ethylidene bis-(4,6-di-t-butylphenyl)fluorophosphonite (ETHANOX™ 398), bis-(2,4-di-t-butyl-6-methylphenyl) ethyl phosphite (IRGAFOS™ 38) and 2,2',2"-nitrilotriethanol tris[3,3',5,5'-tetra-tert-butyl-1,1'-biphenyl-2,2'-diyl)-phosphite (IRGAFOS 12) tetrakis-(2,4-di-t-butylphenyl) 4,4'-diphenylenediphosphonite (P-EPQ) and tris-(2,4-di-t-butylphenyl) phosphite (DOVERPHOS S-480™). Preferably the phosphite antioxidants are present in sufficient amount to stabilize the polymer matrix against oxidation during the heat processing steps. Preferably, the phosphite antioxidants are present in an amount of about 0.01 percent by weight or greater based on the weight of the polymeric matrix, more preferably about 0.02 percent by weight or greater and most preferably about 0.04 percent by weight or greater. Preferably, the phosphite antioxidants are present in an amount of about 0.3 percent by weight or less based on the weight of the polymeric matrix, more preferably about 0.25 percent by weight or less and most preferably about 0.2 percent by weight or less.

The polymeric matrix may further comprise one or more thioester antioxidants. Any alkylthiomethyl phenols, hydroxylated thiodiphenylethers, which decompose hydroperoxide groups by reduction without producing new radicals may be used. Exemplary thioester antioxidants include 2,4-di-octylthiomethyl-6-tert-butylphenol, 2,4-di-octylthiomethyl-6-methylphenol, 2,4-di-octylthiomethyl-6-ethylphenol, 2,6-di-do-decylthiomethyl-4-nonylphenol, 2,2'-thio-bis-(6-tert-butyl-4-methylphenol), 2,2'-thio-bis-(4-octylphenol), 4,4'-thio-bis-(6-tert-butyl-3-methylphenol), 4,4'-thio-bis-(6-tert-butyl-2-methylphenol), 4,4'-thio-bis-(3,6-di-sec.-amylphenol), 4,4'-bis-(2,6-di-methyl-4-hydroxy-phenyl)-disulphide. The one or more thioester antioxidants are present in sufficient amount to stabilize the polymeric matrix under processing conditions. Preferably, the more thioester antioxidants are present in an amount of about 0.01 percent by weight or greater based on the weight of the polymeric matrix, more preferably about 0.02 percent by weight or greater and most preferably about 0.04 percent by weight or greater. Preferably, the one or more thioester antioxidants are present in an amount of about 0.3 percent by weight or less based on the weight of the polymeric matrix, more preferably about 0.25 percent by weight or less and most preferably about 0.2 percent by weight or less.

The polymeric matrix may further comprise one or more volatile acid neutralizers. Volatile as used in this context means that the acid neutralizer volatilizes away from the polymeric matrix when exposed to the conditions of the first oven, for instance at a temperature of about 200 °C and ambient pressure. Any compound that can neutralize acid groups present in the bath from which the polymeric matrix is formed and which exhibits a boiling point below 200°C may be used. Preferably the acid neutralizers contain one or more nitrogen atoms and have a boiling point below 165°C. Exemplary acid neutralizers include ammonia, morpholin, dimethyl ethyl alcohol and diethyl ethyl alcohol, monoethanolamine. The one or more acid neutralizers are present in sufficient amount to neutralize the acid groups in the bath. Preferably, the more acid neutralizers are present in the dispersions in an amount of about 1 percent by weight or greater based on the weight of the polymeric matrix, more preferably about 2 percent by weight or greater and most preferably about 3 percent by weight or greater. Preferably, the more acid neutralizers present in an amount of about 7 percent by weight or less based on the weight of the polymeric matrix, more preferably about 6.0 percent by weight or less and most preferably about 5 percent by weight or less.

The polymeric matrix may further comprise one or more additives commonly used in moldable thermoplastic compositions. Exemplary additives include flame retardants (such as calcium carbonate, aluminum trihydrate (ATH), and magnesium hydroxide), stabilizers, pigments and dyes, mold release agents, and anti-stat agents fillers, such as organic or inorganic particles, including clays, talc, titanium dioxide, zeolites, powdered metals, organic or inorganic fibers, including carbon fibers, silicon nitride fibers, steel wire or mesh, and nylon or polyester cording, nano-sized particles, clays, and so forth; tackifiers, oil extenders, including paraffinic or napthelenic oils; and other natural and synthetic polymers, including other polymers according to embodiments of the present disclosure. The polymeric matrices may contain organic or inorganic fillers or other additives such as starch, talc, calcium carbonate, polymeric fibers (including nylon, rayon, cotton, polyester, and polyaramide), metal fibers, flakes or particles, expandable layered silicates, phosphates or carbonates, such as clays, mica, silica, alumina, aluminosilicates or aluminophosphates, carbon whiskers, carbon fibers, nanoparticles including nanotubes, wollastonite, graphite, zeolites, and ceramics, such as silicon carbide, silicon nitride or titania. Silane-based or other coupling agents may also be employed for better filler bonding. The polymeric matrices may contain processing oils, plasticizers, and processing aids. Rubber processing oils having a certain ASTM designation and paraffinic, napthenic or aromatic process oils are all suitable for use. Generally from about 0 to about 150 parts, more preferably about 0 to about 100 parts, and most preferably from about 0 to about 50 parts of processing oils, plasticizers, and/or processing aids per 100 parts of total polymer are employed. Where present any such ingredients may be present in an amount of about 1 part by weight or greater. Additional processing aids include conventional waxes, fatty acid salts, such as calcium stearate or zinc stearate, (poly) alcohols including glycols, (poly)alcohol ethers, including glycol ethers, (poly)esters, including (poly)glycol esters, and metal salt-, especially Group 1 or 2 metal or zinc-, salt derivatives thereof. For some applications, carbon black is one additive useful for UV absorption and stabilizing properties.

In some embodiments a second neutralizer may be added to the dispersion to neutralize carboxylic acid groups contained on polyolefins dispersed in the dispersion. Any compound that neutralizes carboxylic acid groups and does not negatively impact the products formed may be utilized. Exemplary secondary neutralizers include alkaline metal hydroxides, alkali metal hydroxides, alkali phosphates, ionomeric moieties, ion exchange compounds, metal carbonates, hydrotalcite like compounds, for instance DHT-4A™ hydrotalcite like compounds, and the like, and mixtures thereof. The neutralization of carboxylic acid groups can reduce creep in the parts or articles made with the final composition. As used in this context creep means relaxation under load and time of part or articles made with the final composition and is measured by stress or strain development at a defined temperature and either constant strain or constant stress. The second neutralizer is present in sufficient amount to reduce creep in the compositions and to aid in the oxidative stability of the polymeric matrix. In certain embodiments the second neutralizer is present in an amount of about 250 ppm by weight or greater based on the weight of the polymeric matrix and the fiber bundles, more preferably 500 ppm or greater and most preferably about 750 ppm or greater of the composition. Relative to the polymeric matrix that is coated about the fibers the second neutralizer is present in an amount of about 1000 ppm by weight or greater based on the weight of the polymeric matrix, more preferably 2000 ppm or greater and most preferably about 3000 ppm or greater. In certain embodiments the second neutralizer is present in an amount of about 5000 ppm by weight or less, more preferably 4000 ppm or less and most preferably about 3000 ppm or less based on the weight of the polymeric matrix and the fiber bundles. Relative to the polymeric matrix that is coated about the fibers the second neutralizer is present in an amount of about 5% by weight or less based on the weight of the polymeric matrix, more preferably 2% or less and most preferably about 1 % or less.

Embodiments disclosed herein use a stabilizing agent to promote the formation of a stable dispersion or emulsion. In select embodiments, the stabilizing agent may be a surfactant, a polymer (different from the thermoplastic resin or base polymer detailed above), or mixtures thereof. In other embodiments, the resin is a self-stabilizer, so that an additional exogenous stabilizing agent may not be necessary. For example, a self-stabilizing system may include a partially hydrolyzed polyester, where by combining polyester with an aqueous base, a polyester resin and surfactant-like stabilizer molecule may be produced. In particular, the stabilizing agent may be used as a dispersant, a surfactant for the frothing of a foam formed from the dispersion, or may serve both purposes. In addition, one or more stabilizing agents may be used in combination.

In certain embodiments, the stabilizing agent may be a polar polymer, having a polar group as either a comonomer or grafted monomer. In preferred embodiments, the stabilizing agent may include one or more polar polyolefins, having a polar group as either a comonomer or grafted monomer. Typical polymers include ethylene-acrylic acid (EAA) and ethylene-methacrylic acid copolymers, such as those available under the trademarks PRIMACOR™ (trademark of The Dow Chemical Company), NUCREL™ (trademark of E.I. DuPont de Nemours), and ESCOR™ (trademark of ExxonMobil) and described in U.S. Pat. Nos. 4,599,392, 4,988,781, and 5,938,437, each of which is incorporated herein by reference in its entirety. Other suitable polymers include ethylene ethyl acrylate (EEA) copolymer, ethylene methyl methacrylate (EMMA), and ethylene butyl acrylate (EBA). Other ethylene-carboxylic acid copolymer may also be used. Those having ordinary skill in the art will recognize that a number of other useful polymers may also be used.

If the polar group of the polymer is acidic or basic in nature, the stabilizing agent polymer may be partially or fully neutralized with a neutralizing agent to form the corresponding salt. In certain embodiments, neutralization of the stabilizing agent, such as a long chain fatty acid or EAA, may be from 25 to 200% on a molar basis; from 50 to 110% on a molar basis in other embodiments. For example, for EAA, the neutralizing agent is a base, such as ammonium hydroxide or potassium hydroxide, for example. Other neutralizing agents can include lithium hydroxide or sodium hydroxide, for example. Those having ordinary skill in the art will appreciate that the selection of an appropriate neutralizing agent depends on the specific composition formulated, and that such a choice is within the knowledge of those of ordinary skill in the art. Preferably the neutralizing agent is a volatile acid neutralizer as disclosed herein.

Where a polymeric stabilizing agent is used, the polymeric stabilizing agent may have a molecular weight of about 5,000 to about 125,000 in some embodiments. In other embodiments, the polymeric stabilizing agent may have a molecular weight between about 5,000 and about 45,000. In still other embodiments, the polymeric stabilizing agent may have a molecular weight less than half that of the polyolefin resin.

Other stabilizing agents that may be used include long chain fatty acids or fatty acid salts having from 12 to 60 carbon atoms. In other embodiments, the long chain fatty acid or fatty acid salt may have from 12 to 40 carbon atoms. The salts may be alkali metal or ammonium salts of the fatty acid, prepared by neutralization of the acid with the corresponding base, e.g., NaOH, KOH, $NH_4OH$, and amines, such as ethanol amine, triethanol amine, and the like. These salts may be formed in situ in the dispersion step, as described more fully below. The appropriate fatty acid stabilizing agent may be selected to serve as a dispersant for the extrusion melt step in order to attain the desired average size of the particles.

Additional stabilizing agents that may be useful include cationic surfactants, anionic surfactants, or a non-ionic surfactants. Examples of anionic surfactants include sulfonates, carboxylates, and phosphates. Examples of cationic surfactants include quaternary amines. Examples of non-ionic surfactants include block copolymers containing ethylene oxide and silicone surfactants. Surfactants useful as a stabilizing agent maybe either external surfactants or internal surfactants. External surfactants are surfactants that do not become chemically reacted into the polymer during dispersion preparation. Examples of external surfactants useful herein include salts of dodecyl benzene sulfonic acid and lauryl sulfonic acid salt. Internal surfactants are surfactants that do become chemically reacted into the polymer during dispersion preparation. An example of an internal surfactant useful herein includes 2,2-dimethylol propionic acid and its salts.

In particular embodiments, the dispersing agent or stabilizing agent may be used in an amount ranging from greater than zero to about 60% by weight based on the amount of polyolefins (or polyolefins mixture) used. For example, long chain fatty acids or salts thereof may be used from 0.5 to 10% by weight based on the amount of polyolefins. In other embodiments, ethylene-acrylic acid or ethylene-methacrylic acid copolymers may be used in an amount from 0.5 to 60% by weight based on the amount of the polyolefins. In yet other embodiments, sulfonic acid salts may be used in an amount from 0.5 to 10% by weight based on the amount of polyolefins.

More than one stabilizing agent may be used, and combinations may be used as a dispersant and as a surfactant, for example. One of ordinary skill in the art will recognize that the stabilizing agent used to create a relatively stable aqueous dispersion of polyolefin resin particles may vary depending on the nature of the polyolefin particles employed. Additionally, the stabilizing agent used may be the same or different than the frothing surfactant used in the preparation of a froth from the dispersion.

The compositions disclosed herein contain fibers. Fibers are used to enhance the properties of structures prepared from the compositions. Any fibers that improve the properties of structures made utilizing the fibers may be used in the compositions. Fibers may be utilized to improve one or more of the following properties: impact resistance, as demonstrated by notched Izod; modulus, as demonstrated by tensile modulus and flex modulus; tensile strength; improved creep resistance as determined by test method ASTM D2990 and the like. Exemplary fibers useful in the compositions disclosed include glass fibers, carbon fibers, metal based fibers, polymeric fibers, and the like. Exemplary metal based fibers include stainless steel, and the like. Exemplary polymeric fibers include polyamide fibers, cellulose ether fibers, polyolefin fibers and the like. This disclosure contemplates the use of a mixture of types of fibers, for instance glass and stainless steel fibers or glass fibers and carbon fibers. Preferred classes of fibers are glass and polymeric fibers. Even more preferred are glass fibers. In some embodiments the compositions disclosed are utilized as concentrates containing high levels of fibers which are adapted to be mixed with other polyolefins that do not contain fibers. The concentrates containing fibers are typically blended with other polyolefins in ratios so as to prepare final structures having the concentration of fibers which provide the desired enhanced properties of the resulting structures. In a number of embodiments concentrates with higher concentrations of fibers are desired to promote efficient blending of the concentrates with other polyolefin compositions. The one or more fibers are present in the concentrates in a sufficient amount to enhance the properties of the final structures prepared using the concentrates and to efficiently disperse the fibers throughout the final structure. Preferably, the fibers are present in an amount of about 60 percent by weight or greater based on the weight of the concentrate, more preferably about 75 percent by weight or greater and most preferably about 80 percent by weight or greater. Preferably, the fibers are present in an amount of about 95 percent by weight or less based on the weight of the composition, more preferably about 90 percent by weight or less and most preferably about 88 percent by weight or less. Concentrate refers to the structures of bundles or fibers and polymeric matrix formed as disclosed herein.

The fibers may be any dimensions or combination of dimensions that provide the desired enhanced properties in the final structures containing the polyolefins and fibers. Among the dimensions that impact the desired properties is the length. The fibers are preferably provided in long strands that are passed through the process steps as disclosed herein. The fibers with the polymeric matrix dispersed about and between the fibers are cut at the end of the process. The length of the fibers is based on the desired final use. In some embodiments the concentrates are formed into pellets. In these embodiments the fibers extend the length of the pellets in the processing direction, which is the direction that fibers are passed through the process. Preferably the fibers have a length of about 3 mm or greater and more preferably about 6 mm or greater. Preferably the fibers have a length of about 50 mm or less, more preferably about 30 mm or less and most preferably about 13 mm or less. In some embodiments longer fibers improve the creep resistance of the ultimate structures prepared from the structures of the disclosure.

In some embodiments, the compositions of the invention may be elongated structures of the fibers with the polymeric matrix dispersed between and coated about the fibers. Preferably the fibers are provided in bundles of fibers from a spool (bobbin or creel). The elongated structures may comprise one or more bundles of fibers shaped into a shape transverse to the processing direction. The particular length is chosen for the particular application and the fibers continue through structure transverse to direction of the shape. Exemplary shapes of the structures include rods, tapes, ducts, tubes, profiles, and the like. The structures have a cross-sectional shape, which is transverse to the processing direction. The cross sectional shape may be any shape suitable for the use of the structures, for example round, oval, square, polygonal (triangular, rectangular, pentagonal, hexagonal, octagonal and the like) and the like. The shape may have elongated flat opposing sides and rounded edges or sides. The shape may be irregular.

The fibers are preferably provided in bundles of elongated fibers typically called rovings which are delivered on spools. The measure Tex is a unit measure for the linear mass of density of fibers and is defined as the mass in grams per 100 meters. When measuring objects that consist of multiple fibers, the term "filament tex" is sometimes used, referring to the mass in grams per 1000 meters of a single filament. One can calculate the diameter of a filament yarn using tex with the following formula:

$$\text{Diameter} = \sqrt{\frac{\text{Tex}}{1000 \cdot \text{density} \cdot 0.7855}}$$

with density in grams per cubic centimeter and diameter in millimeters. Preferably the bundles of fibers exhibit tex of 500 or greater, more preferably about 1000 or greater and most preferably about 1200 or greater. Preferably the bundles of fibers exhibit tex of 4000 or less, more preferably about 3600 or less and most preferably about 1400 or less.

The fibers or bundles of fibers may contain coatings to enhance bonding of the fibers to the polymeric matrix. In some embodiments it is desirable to match the coating to the polymeric matrix. Such coatings are sometimes referred to as sizing. Known coating or sizing compositions may be used on the fibers or bundles of fibers. For glass fibers the sizing is preferably an alkyl silane having a reactive group. As used herein silane refers to the group $-Si\text{-}(OR)_a(R)_b$ wherein R is separately in each occurrence lower alkyl, a is 1 to 3 and b is 3 - a. Preferably the alkyl group for the alkyl silane is a lower alkyl, such as ethyl, propyl or butyl. Exemplary reactive functional group include amino styryl, aromatic, vinyl, glycidyl (epoxy), mercapto, cyanoacrylate, and the like, with amino and glycidyl being preferred. The amount of coating or sizing on the fibers or bundle of fibers is an amount such that the bond between the polymeric matrix and the fibers is enhanced. Preferably, the sizing is present in an amount of about 0.25 percent by weight or greater based on the weight of the fibers and the sizing, and most preferably about 1.0 percent by weight or greater. Preferably, the sizing is present in an amount of about 3.5 percent by weight or less based on the weight of the fibers and the sizing and most preferably about 2.2 percent by weight or less. The fiber suppliers generally provide the fibers or bundles of fibers with the coating or sizing pre-applied. Alternatively the fibers or bundles of fibers can be coated with the coating or sizing by passing the fibers through a bath containing the coating or sizing under conditions such that the coating or sizing is applied to the surface of the fibers. In some embodiments the sizing on the bundles of fibers is removed. In certain embodiments the sizing can inhibit adhesion between the polymeric matrix and the fibers. The sizing can be removed by passing the bundles of fibers thought a high temperature oven, for example at 650 °C or greater, or through a highly basic bath, for instance a bath of NaOH.

In some embodiments the composition comprising the polymeric matrix and the fibers or bundles of fibers is prepared by passing fibers or bundles of fibers through a bath comprising water, polyolefins and a stabilizing agent; removing water in the polymeric matrix and on the fibers after the fibers or bundles of fibers with the polymeric matrix disposed thereon exit the bath. Any means of removing water may be used. Preferably the water is removed by passing the fibers or bundles of fibers and the polymeric matrix through an oven. In addition to or in the alternative the bundles of fibers with the polymeric matrix disposed thereon can be passed through a flowing gas or a vacuum to enhance removal of the water. In some embodiments the flowing gas or vacuum can be present in the oven. After exiting the oven the fibers or bundles of fibers with the polymeric matrix dispersed in and disposed on the fibers or bundles of fibers are cut to the desired length.

The polyolefins and the dispersion stabilizing agent are preferably dispersed in a liquid medium, which in some embodiments is water. The bath comprises water with one or more polyolefins dispersed therein. The polyolefins are preferably in a liquid state in the form of particles dispersed in the bath. The stabilizer functions to support the particles in the water bath. The concentration of polyolefins in water is selected to facilitate dispersing the polymeric matrix between the fibers of a bundle and to coat the polymeric matrix on the surface of the fibers or the bundle of fibers and to provide a bath viscosity sufficient to efficiently form the composition of fibers and the polymeric matrix. Preferably the viscosity of the bath is about 20 centipoise (mPa.s) or greater, more preferably about 50 centipoise (mPa.s) or greater and most preferably about 140 centipoise (mPa.s) or greater. Preferably the viscosity of the bath is about 300 centipoise (mPa.s) or less, more preferably about 200 centipoise (mPa.s) or less and most preferably about 160 centipoise (mPa.s) or less. Below about 20 centipoise the glass content in the resulting coated bundle of fibers may be too high. Above 300 centipoise the glass content may be too low. Viscosity can be adjusted by adding one or more of polyolefins, fillers or thickening agents.

The concentration of one or more polyolefins in the water bath is chosen to facilitate dispersing the polyolefins between the fibers and coating the polyolefins about the outside of the fibers in an efficient manner. The water bath contains a number of ingredients which are nonvolatile during processing as described herein. Such nonvolatile ingredients can be referred to as solids. The water bath can contain a concentration of solids which facilitates the preparation of the bundles of fibers with the polymeric matrix disposed about and interspersed within the bundles as described herein. Solids include the polyolefins, fillers, functional additives such as antioxidants, secondary neutralizers and pigments and the like. Preferably the concentration of solids in the water bath is about 10 percent by weight or greater of the bath, more preferably about 15 percent by weight or greater, even more preferably about 20 percent by weight or greater and most prefer-ably about 25 percent by weight or greater. Preferably the concentration of the one or more solids in the water bath is about 65 percent by weight or less of the bath, more preferably about 60 percent by weight or less, even more preferably about 50 percent by weight or less and most preferably about 40 percent by weight or less. Preferably the concentration of the one or more polyolefins in the water bath is about 5 percent by weight or greater of the bath, more preferably about 10 percent by weight or greater and most preferably about 15 percent by weight or greater. Preferably the concentration of the one or more polyolefins in the water bath is about 65 percent by weight or less of the bath, more preferably about 60 percent by weight or less and most preferably about 55 percent by weight or less. The stabilizer is present in sufficient amount to stabilize the dispersion of the one or more polyolefins in water. Preferably the one or more stabilizers are present in an amount of about 0.5 percent by weight or greater based on the weight of the water bath, more preferably about 1 percent by weight or greater and most preferably about 2 percent by weight or greater. Preferably the one or more stabilizers are present in an amount of about 10 percent by weight or less based on the weight of the water bath, more preferably about 8 percent by weight or less and most preferably about 6 percent by weight or less.

In some embodiments, sufficient base is added to neutralize the dispersion of polyolefins in the bath to achieve a pH range of about 6 to about 14. In particular embodiments, sufficient base is added to maintain a pH between about 9 to about 12. Water content of the dispersion may be controlled so that the solids content as described herein is achieved.

In some embodiments dispersions in accordance with the present disclosure may include one or more polyolefins, which may include at least one non-polar polyolefin described above, a dispersion stabilizing agent, which may include at least one polar polyolefin, and optionally a filler. With respect to the one or more polyolefin and the dispersion stabilizing agent, in preferred embodiments, the at least one non-polar polyolefin may comprise about 30 percent by weight or greater of the total amount of polymer and dispersion stabilizing agent in the solids in the dispersion and more preferably about 50 percent by weight or greater. Preferably, the at least one non-polar polyolefin may comprise about 99 percent by weight or less of the total amount of polymer and dispersion stabilizing agent in the solids in the dispersion, more preferably about 80 percent by weight or less, and even more preferably about 70 percent by weight or less. With respect to the filler, typically, an amount greater than about 0 to about 1000 parts per hundred of the combined amount of the one or more polyolefins and dispersion stabilizing agent is used, in selected embodiments, between about 50 to 250 parts per hundred are used; between about 10 to 500 parts per hundred in other embodiments; between about 20 to 400 parts per hundred in other embodiments; and between about 0 to about 200 parts per hundred in yet other embodiments.

In some embodiments the materials present in water in the polyolefin dispersion may comprise about 15 to about 30 percent by weight of the non-water components of a functional polyolefin which is a polyolefin having hydrophilic moieties grafted to the polyolefin, for example a low density polyethylene having acrylic acid groups grafted thereon; about 2 to about 15 percent by weight of a functional polyolefin which exhibits high melt flow rates, for example a polypropylene wax having maleic anhydride grafted thereto; about 50 to about 80 percent by weight of a non-functional (non-polar) polyolefin which can be a polypropylene homopolymer or copolymer, the copolymer can be a random copolymer or impact copolymer polypropylene which may have a melt flow rate of about 20 to about 50 and an elongation at break of about 10 to 20 percent according to test method ASTM D1238-88. The polymeric matrix formed may contain a similar compositional make up except the levels of neutralizer are preferably those as disclosed after treatment of the fiber bundles with the polymeric matrix in one or more ovens.

The water bath is maintained at a temperature at which the one or more polyolefins are in a molten or liquid state so as to facilitate dispersion of particles of the one or more polyolefins in water. Typically the bath is maintained at a ambient temperatures, of about 18 °C or and most preferably about 20 °C or greater. Preferably the bath is maintained at a temperature of about 30 °C or less and most preferably about 25 °C or less. Other bath temperatures may be used. The particles of the one or more polyolefins in the water bath are of a size sufficient to facilitate efficient formation of the polymeric matrix about the fibers. As used herein particle size which is the volume-mean particle size. Particle size may be measured by laser diffraction techniques. A particle size in this description refers to the diameter of the polymers in the dispersion. For polymer particles that are not spherical, the diameter of the particle is the average of the long and short axis of the particle. Particle sizes can be measured on a Beckman-Coulter LS230 laser-diffraction particle size analyzer. Preferably the size of the particles is about 0.2 microns or greater, more preferably about 0.5 microns or greater and most preferably about 1.0 microns or greater. Preferably the size of the particles is about 10 microns or less, more preferably about 5 microns or less and most preferably about 2 microns or less.

The dispersions may optionally include a filler wetting agent. A filler wetting agent generally may help make the filler and the polyolefin dispersion more compatible. Useful wetting agents include phosphate salts, such as sodium hexametaphosphate. A filler wetting agent can be included in a composition of the present invention at a concentration of at least about 0.5 part per 100 parts of filler, by weight. The dispersion may optionally include a thickener. Thickeners may be useful to increase the viscosity of low viscosity dispersions. Thickeners suitable for use may be any known in the art such as for instance poly-acrylate type or associate non-ionic thickeners such as modified cellulose ethers. For example, suitable thickeners include ALCOGUM™ VEP-II (trade name of Alco Chemical Corporation), RHEOVIS™ and VISCALEX™ (trade names of Ciba Ceigy), UCAR ® Thickener 146, or ETHOCELL™ or METHOCELL™ (trade names of the Dow Chemical Company) and PARAGUM™ 241 (trade name of Para-Chem Southern, Inc.), or BERMACOL™ (trademark of Akzo Nobel) or AQUALON™ (trademark of Hercules) or ACUSOL ® (trademark of Rohm and Haas). Thickeners may be used in any amount necessary to prepare a dispersion of desired viscosity. The ultimate viscosity of the dispersion is, therefore, controllable. Addition of the thickener to the dispersion including the amount of filler may be performed with conventional means to result in viscosities as needed.

Also, embodiments of the present disclosure may be characterized by their stability when a filler is added to the polyolefin / dispersion stabilizing agent mixture. In this context, stability refers to the stability of viscosity of the resultant aqueous polyolefin dispersion. In order to test the stability, the viscosity is measured over a period of time. Preferably, viscosity measured at 20 °C should remain +/- 10% of the original viscosity over a period of 24 hours, when stored at ambient temperature.

The bath can be prepared by contacting the ingredients with agitation or milling in a heated vessel, for instance in a batch process. In a specific embodiment, the one or more polyolefins and a dispersion stabilizing agent are melt-kneaded in an extruder along with water and a neutralizing agent to form a dispersion. In some embodiments, a filler may be added during or after blending the one or more polyolefins and dispersion stabilizing agent.

The fibers are passed through the bath for a sufficient time to prepare a composition containing the desired concentration of fibers in the polymeric matrix. It is desired to achieve this concentration as quickly as possible. Residence time can be expressed in the speed of the fibers through the bath, for instance expressed as meters per minute through the bath. Preferably the speed of the fibers through the water bath is about 0.5 meters per minute or greater, more preferably about 0.75 meters per minute or greater and most preferably about 1.0 meters per minute or greater. Preferably the speed of the fibers through the water bath is about 40.0 meters per minute or less, more preferably about 25 meters per minute or less and most preferably about 10 meters per minute or less. The length of the path of the fibers through the bath can be adjusted. Preferably the length of the path of the fibers through the bath is about 1 cm or greater, more preferably about 4 cm or greater and most preferably about 6 cm or greater. Preferably the length of the path of the fibers through the bath is about 80 cm or less, more preferably about 50 cm or less and most preferably about 30 cm or less.

After exiting the bath the bundle of fibers with a polyolefin matrix dispersed within and coated about the bundle of fibers, bundle of fibers and polymeric matrix, is passed through an oven to remove residual water and the volatile acid neutralizers and to sinter and/or melt the one of more polyolefins to so as to enhance the diffusion of the polymeric matrix through the bundle of fibers and coating of the fibers with the polymeric matrix. The conditions of the oven are chosen to achieve removal of water and other volatile components including the acid neutralization agents, the diffusion of the polymeric matrix through the fiber bundle and coating of the fibers with the polymeric matrix, and sintering of the polymeric matrix about the bundle of fibers. Preferably the water content after passing the bundle of fibers and polymeric matrix through the oven is at a level that does not interfere with further processing of the bundle of fibers and polymeric matrix and which does not negatively impact the properties of structures prepared from the bundle of fibers and polymeric matrix. Preferably the water content is about 0.15 percent by weight or less, more preferably 0.05 percent by weight or less and most preferably 0.01 percent by weight or less. The acid neutralizer is preferably removed during this process. The acid neutralizer is removed to a level such that the resulting the bundle of fibers and polymeric matrix does not exhibit significant odor in further processing Preferably the concentration of acid neutralizer in the bundle of fibers and polymeric matrix is about 0.05 percent by weight or less, more preferably about 0.02 percent by weight or less and most preferably about 0.005 percent by weight or less. The oven is set at a temperature such that the volatile components are removed in an efficient manner. The temperature is preferably about 150 °C or greater, more preferably about 165 °C or greater and most preferably about 185 °C or greater. The temperature is preferably about 350 °C or less, more preferably about 300 °C or less and most preferably about 280 °C or less. The residence time of the fibers is dependent upon the temperature of the oven, the presence of flowing gas or vacuum and the length of the oven. Preferably the residence time in the oven, taking this into consideration, is selected to achieve the desired level volatile components. Preferably the residence time in the oven is about 10 seconds or greater, more preferably about 20 seconds or greater and most preferably about 30 seconds or greater. Preferably the residence time in the oven is about 300 seconds or less, more preferably about 250 seconds or less and most preferably about 200 seconds or less.

The oven may also be run under conditions to remove volatile components from the vicinity of the bundles of fibers and polymeric matrix so as to enhance their removal from the bundles of fibers and polymeric matrix. Any such conditions that enhance the removal of volatile components from the vicinity of the bundles of fibers and polymeric matrix may be used. Exemplary conditions include flowing a gas over the bundles, such as air or an inert gas, such as nitrogen, argon and the like; applying a vacuum to the oven; and the like. In some embodiments it is preferred to pass an inert gas through the oven so as to remove volatile components and to significantly reduce the oxygen concentration in the oven to reduce the susceptibility of oxidizing the polymeric components that are on the glass fibers.

In some embodiments the oven can have two or more different sections or the bundles of fibers can be passed through two ovens in sequence. The first oven section or oven can serve the primary function of removing water from the bundles as quickly as possible. The second and subsequent ovens or oven sections primarily function to sinter the strands so as to enhance bond strength between the fibers and the polymeric matrix. The first oven or oven section can utilize higher temperatures for the purpose of removing water as quickly as possible. The subsequent ovens or oven sections generally operate at lower temperatures with drier air to reduce oxidation of the polymeric matrix. In some embodiments the subsequent oven sections can have lower moisture and/or oxygen content than the first oven or oven sections. The subsequent ovens or oven sections may have reduced oxygen. Oxygen can be reduced by adding inert gas to the atmosphere of these ovens. In some embodiments the ovens or sections of ovens can have little or no oxygen, for example 1 percent by volume or less or 0.5 percent by volume or less.

After exiting the oven the bundles are cooled so as to allow the polymer matrix to solidify and cut to a desired length as discussed hereinbefore. Cooling may be achieved by any know processes for cooling. Exemplary cooling processes include exposure to ambient temperatures, reduced temperatures, flowing a gas at ambient or below ambient temperatures over the bundles, open air cooling over some path length, and the like. Cutting may be achieved by any method known in the art. Preferably the bundles are cut in the direction transverse to processing, the direction transverse to passing them through the bath. Exemplary cutting processes include cutting using rotary cutter devices, rotary needle knife push through type devices, or guillotine type devices. In some embodiments, prior to entering the oven a plurality of bundles of fibers and polymeric matrixes may be shaped into a shape in the direction transverse to the processing direction. The plurality of bundles are passed through a die of the desired shape. As the polymeric matrix is still in a molten or partially molten state upon exit from the bath and therefore as the bundles are passed through a die, the bundles passed through the die are fused in the desired shape by the polymeric matrix as they bundles exit the die. The shape can be any desired shape as disclosed herein. The shaped products can be cooled after exiting the die or passed directly into the oven as disclosed hereinafter. Such shaped products can be used for a variety of specialized applications for instance, as reinforcement structures, conduits for cables, tapes for in-mould reinforcing of moulded goods, tubes, single or multi strand rods for cast moulding processes and the like.

Alternatively, the bundles may be further processed prior to cutting to the desired length the bundles of fibers and polymeric matrix can be subjected to any process to enhance their use in downstream processes. In some embodiments one or more of the bundles of fibers disposed in a polymeric matrix, which may shaped as disclosed hereinbefore, may have be processed to apply one or more components about the one or more bundles of fibers. The one or more components can be any component that enables the use of the bundles in downstream processing. Exemplary coating materials include one or more thermoplastic polymers, for example one or more of the polyolefins, a different thermoplastic polymer, or one or more different polyolefins, fillers, stabilizer, and other functional polymer bound packages and masterbatches, and the like. In some embodiments the component is one or more of the previously applied polyolefins. In some embodiments the component is one or more different polyolefins. A different polyolefin can impart additional properties or performance characteristics as desired for an end use application. In some embodiments the component is one or more high melt flow rate polyolefins or a polyolefin prepared using metallocene catalysts, for example polyolefins prepared using metallocene catalysts wherein the polyolefins exhibit high melt flow rates as disclosed herein. The bundles of fibers can be cut into pellets and used to introduce the fibers into non fiber containing polyolefins. This is typically achieved by blending and mixing the pellets with fibers with pellets that do not contain fibers to achieve the desired concentration of fibers suitable for the desired end use. The blending can be performed in an extruder. Alternatively the fiber bundles with polymeric matrices having a high melt flow rate polyolefin coated thereabout can contain a sufficient amount of the high melt flow rate polyolefin such that pellets thereof can be used in a downstream use to provide the desired fiber concentration without further blending with non-fiber containing polyolefins. The high melt flow rate polyolefins coated about the bundles of fibers can have any melt flow rate that enhances the blending of pellets formed from the bundles of fibers and polymeric matrix with non-fiber containing thermoplastic materials or which allows formation of pellets that can be used in an end use without further blending with polyolefins not containing fibers. Preferably the high melt flow rate polyolefin exhibits a melt flow rate, as measured by Melt Flow Rate according to test method ASTM D1238-88, of about 70 or greater, more preferably about 100 or greater and most preferably about 500 or greater. Preferably the high melt flow rate polyolefin exhibits a melt flow rate of about 1500 or less, more preferably 1200 and most preferably about 1,000 or less. Exemplary high melt flow rate polyolefins include uncracked polyolefins, polyolefins prepared using metallocene catalysts and the like. The high melt flow rate polyolefin is applied in sufficient amount to enhance further processing as discussed herein, and may comprise other additives or functional ingredients and other polymers to further enhance the performance of the final compositions. In exemplary embodiments the coated fiber bundles contain about _10_ percent by weight or greater of a thermoplastic composition, one or more polyolefins, based on the based on the weight of the polymeric matrix, the bundles of fibers and the thermoplastic composition; more preferably about 20 percent by weight or greater, and most preferably about 30 percent by weight or greater. In exemplary embodiments the coated fiber bundles contain about 80 percent by weight or less of a thermoplastic composition, one or more polyolefins, based on the based on the weight of the polymeric matrix, the bundles of fibers and the thermoplastic composition; more preferably about 70 percent by weight or less, and most preferably about 60 percent by weight or less. The amount of bundles of fibers and the polymeric matrix in such embodiments can be about 15 percent by weight or greater based on the weight of the polymeric matrix, the bundles of fibers and the thermoplastic composition; more preferably about 20 percent by weight or greater, and most preferably about 25 percent by weight or greater. The amount of bundles of fibers and the polymeric matrix in such embodiments can be about 80 percent by weight or less based on the weight of the polymeric matrix, the bundles of fibers and the thermoplastic composition; more preferably about 75 percent by weight or less, and most preferably about 70 percent by weight or less.

The additional component may be applied to the bundles of fibers and polymeric matrix using any process that allows coating of a bundle of fibers with an additional component. Exemplary processes include wire coating, calendaring, spraying, dipping, dusting and the like. In some embodiments the additional component is applied in a molten state. In some other embodiments the fibers include combinations of different fiber types and sources. In each strand or in part of the strands. After applying the additional component the coated bundle of fibers and polymeric matrix may be passed through an oven to agglomerate, homogenize, convert, crosslink, heattreat, dry the applied component and the like. An oven as described hereinbefore can be used. Further treatment steps may be combined into the oven step or separated from it and include e-beam, UV treatment, corona treatment or plasma treatment or a combination of such treatments prior final use of the bundles of fibers and polymeric matrix and any components applied onto them.

The bundles of fibers and polymeric matrices in the form of pellets can be used to introduce the fibers into thermoplastic compositions by blending as disclosed herein. The formed blends can be used to prepare a number of useful structures by any process typically utilized to form structures from thermoplastic compositions. Exemplary processes include, injection molding, compression molding, blow molding, rotomolding, cast molding, sheet molding, casting with thermosets and the like. In some embodiments pellets having a thermoplastic composition about the bundles of fibers and the polymeric matrix may be processed without blending with other polyolefins in such processes. In some embodiments pellets having a thermoplastic composition about the bundles of fibers and the polymeric matrix are blended with other thermoplastics and enhance to processing of the blend or the properties of the structures prepared. Exemplary structures formed include interior and exterior car parts such as door carrier plates, front end carriers, lift gates, instrument panel carriers, shrouds and fans, consoles, roof trim, and the like.

Tapes, rods or sheets of the bundles of fibers and the polymeric matrix can be used to reinforce a number of structures by adhering them by melt bonding, inlay molding, or adhesives to structures. Exemplary structures include car seats, front end carriers, door panels, bonnets, rear hatch, lift gates, under body panels, cowls, instrument panel carriers, and in any application that benefits from localized reinforcements. The compositions of the invention can be used as components structures such as those disclosed herein.

The aqueous dispersions may further comprise common ingredients such as other conventional additives. These include, but are not limited to, fillers, flame retardants (such as calcium carbonate, aluminum trihydrate (ATH), and magnesium hydroxide), stabilizers, pigments and dyes, mold release agents, and anti-stat agents. Other polymer or cellulosic based fiber compositions may be used in combination with the glass fibers. Additives may be combined with the dispersion, or with the thermoplastic resins, stabilizing agents, or fillers used in the dispersion. For example, additives may include a wetting agent, fire retardants, surfactants, anti-static agents, antifoam agent, anti block, wax-based dispersion, pigments, a neutralizing agent, a thickener, a compatibilizer, a brightener, a rheology modifier, a biocide, a fungicide, reinforcing fibers, and other additives known to those skilled in the art. While optional for purposes of the present invention, other components may be highly advantageous for product stability during and after the manufacturing process.

The compositions of the invention may be used to prepare compositions with any targeted fiber content, typically 20%, 30% and 40% are common concentrations of fibers in the final application but this can vary. Molded products prepared to a final composition with 30% glass fiber content using pellets containing bundles of glass fibers in a polyolefin matrix exhibit a variety of advantageous properties. The molded products demonstrate excellent tensile strengths, as measured according to ISO R527 or ASTM D638 it is expected that both tests would yield consistent results, and preferably exhibit a tensile strength of about 80 MPa or greater, more preferably about 85 MPa or greater, and most preferably about 90 MPa or greater. The molded products demonstrate excellent tensile elongation at break as measured according to ISO R527 or ASTM D638 and preferably exhibit a tensile elongation at break of about 1 percent or greater, more preferably about 1.5 or greater, and most preferably about 1.8percent or greater. The molded products demonstrate excellent notched Izod performance as measured according to ASTM D256 and preferably exhibit a notched Izod of about 10 KJ/m$^2$ or greater, more preferably about 20 KJ/m$^2$ or greater, and most preferably about 25 KJ/m$^2$ or greater. Pellets of bundles of glass fibers in a polyolefin matrix prepared according to the process of the disclosure exhibit low fuzz or fibers protruding from the pellets. In addition such pellets are capable of being processed in high efficiency processing equipment, for instance can be conveyed by air.

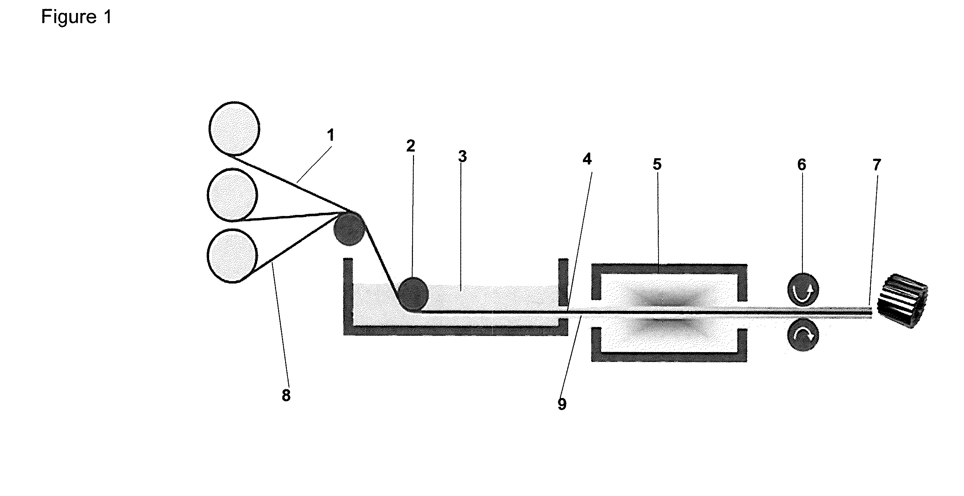

Figure 1 shows one embodiment of the process disclosed herein. Disclosed is a roving rack 1, a roving spreader 2, a bath 3 containing a water dispersion of polyolefins, a die 4 at the exit of the bath 3, an oven 5, a strand puller 6 and a pelletizer 7. Also shown are fiber bundles 8 being passed sequentially through the bath 3, to coat the fiber bundles 8 with a polymeric matrix 9, the die, a wet die, to shape the polymeric matrix 9 and fiber bundles 8 to the desired shape transverse to the direction of travel of the fiber bundles 9. The bundles of fibers 8 with the polymeric matrix 9 disposed thereabout are passed into and through an oven 5 to remove volatile ingredients and to sinter the polymeric matrix 9 about the fiber bundles 8. A strand puller 6 is located after the oven 5 which pulls the bundles of fibers 8 through the process. The bundle of fibers 8 with the polymeric matrix 9 thereabout is then passed through a pelletizer to cut the polymeric matrix 9 and bundles of fibers 8 into the desired length in the direction of travel of the bundles of fibers 8.

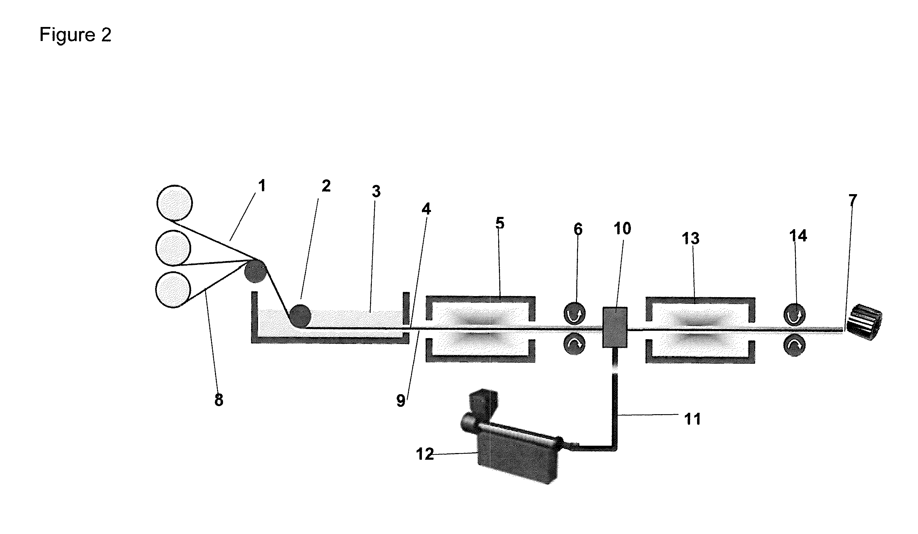

Figure 2 shows a second embodiment of the process. In this embodiment the process is essentially the same through the strand puller 6. Thereafter the polymeric matrix 9 and bundles of fibers 8 are passed through a wire coater 10 connected by line 11 to an extruder 12 that feeds the wire coater 10 with a polyolefin in the molten state. The molten polyolefin is coated about polymeric matrix 9 and bundles of fibers 8 in the wire coater 10. Thereafter the polyolefin coated polymeric matrix 9 and bundles of fibers 8 are passed into a second oven 13 to sinter the polyolefin coating about the polymeric matrix 9 and bundles of fibers 8. The coated polymeric matrix 9 and bundles of fibers 8 are pulled through a second strand puller 14 and cut in the strand pelletizer 7.

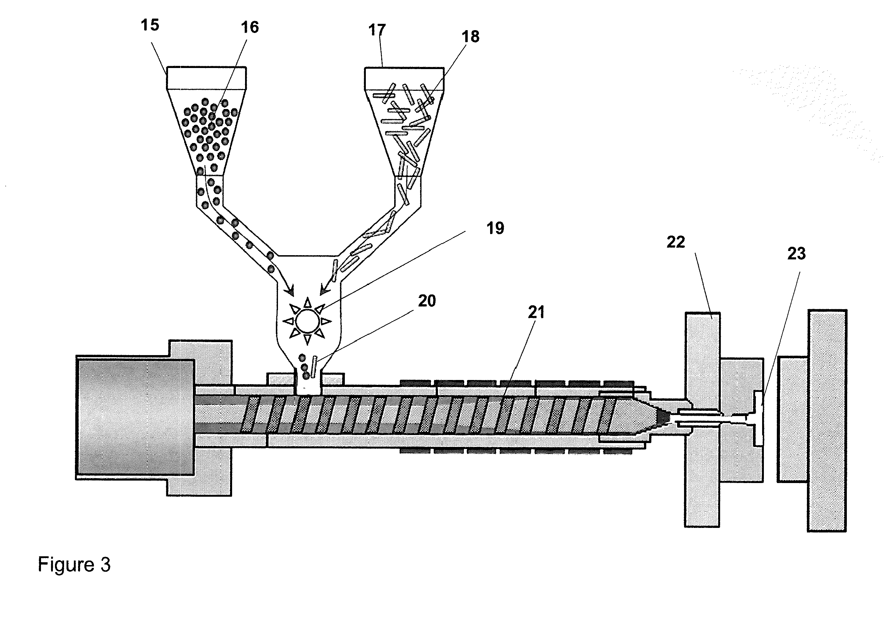

Figure 3 shows a feeder 15 containing natural polyolefin pellets 16 (not containing fibers) and a second feeder 17 with pellets of a polyolefin polymer matrix containing bundles of fibers 18 into a mixer 19. The pellets 16 and 18 are mixed in the mixer 19 and fed by a line 20 into an extruder 21 wherein the pellets 16 and 18 are blended under shear to form a homogeneous mixture of polyolefins having a relatively uniform distribution of fibers throughout. The mixture is extruded from the extruder and either pelletized or introduced into a molding apparatus, 22 having a mold 23 to form the mixture into a desired shape.

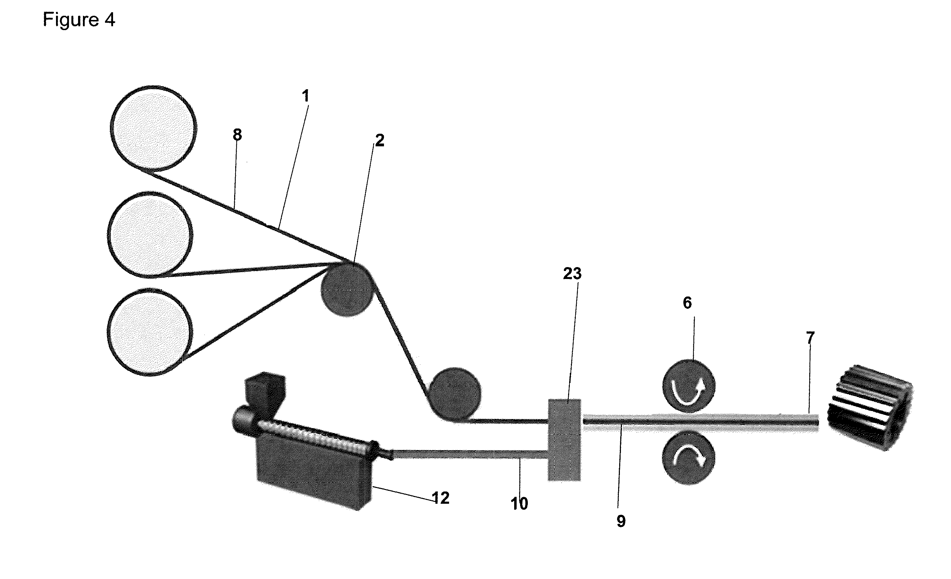

Figure 4 illustrates a traditional process for coating fibers with a thermoplastic material. Rovings of fibers 8 are passed through a roving rack 1 and a roving spreader 2 and through a molten bath of thermoplastic resin 23, which is connected by a line 10 to an extruder 12. The fibers 8 with the resin coated thereon 9 is pulled through a strand puller 6 and cut in a pelletizer 7.

**Illustrative Embodiments of the Invention**

The following examples are provided to illustrate the invention, but are not intended to limit the scope thereof. All parts and percentages are by weight unless otherwise indicated.

Process for preparing fiber bundles with a polymeric matrix

The following ingredients are utilized in preparing fiber bundles with polymeric matrices. The Primary Polyolefin Dispersion is a dispersion is prepared by either batch agitation or passing the mixture through a compounder, that comprises about 50 weight percent polymeric solids in water. The polymeric solids may comprise functional and non-functional polyolefins, functional polyolefins include a low density polyethylene -with acrylic acid grafted thereto and a maleic anhydride grafted polypropylene wax. The non-functional polyolefins further comprise, homo or copolymers of polypropylene with specific ethylene content. The polymeric solids may contain a plastomer or elastomer,. The above primary polyolefin dispersion is neutralized with a volatile neutralizer.

The secondary polyolefin dispersion is a dispersion is prepared by either batch agitation or passing the mixture through a compounder, that comprises about 30 to about 50 weight percent polymeric solids in water. The polymeric solids comprise functional polyolefins. The above secondary polyolefin dispersion is neutralized with a volatile neutralizer such as ammonia, DMEA (dimethyl ethanol amine), or other volatile neutralizer.

Where two dispersions are utilized they are mixed in specific ratio and to this mixture a combination of additives are added.

Functional polyolefin 1 is a low density polyethylene -with acrylic acid grafted thereto (LDPE EAA) (PRIMACOR[tm] 5980i polyethylene - ethylene acrylic acid copolymer)

Functional Polyolefin 2 is a maleic anhydride grafted polypropylene wax (LICOCENE[tm] maleic anhydride grafted polypropylene wax)

Functional polyolefin 3 is a functional polyolefin include a maleic anhydride grafted olefin polymer such as polypropylene of molecular weight of 5000 Mw.

Non polar polyolefin 1 polypropylene ethylene copolymer having a 44 MFR and 3 mole percent ethylene content;

Non polar polyolefin 2 is a homopolymer of polypropylene having a 950 MFR;

Plastomer/Elastomer is a polypropylene ethylene copolymer prepared using metallocene catalysts containing 16 mole present of ethylene VERSIFY[tm] 3401 plastomer/elastomer

The additives include the following ingredients. Antioxidant 1 - tris(2,4-ditert-butylphenyl)phosphite

Antioxidant 2 - pentaerythritol tetrakis(3(3,5-di-tert-butyl-4-hydroxyphenyl)propionate

Antioxidant 3 - octadecyl-3-(3,5-di-tert- butyl-4-hydroxyphenyl)-propionate

Antioxidant 4 - didodecyl-3,3'-thiodipropionate

Dispersion stabilizer -a hydrotalcite

Carbon black pigment in emulsified or loosely compacted powder form.

Fiber bundles - fiber bundles with a sizing applied to the surface of the fibers wherein the bundles have a Tex of 2400 and fiber diameter of 13 microns.

Process description

The first process step comprises guiding the sized fiber bundles or rovings into one or more wetting baths for coating with the low viscosity, about 150 mPa.s, water based polymer dispersion and additive mixture. The rovings with wet dispersions additive mixture coated onto is guided into an oven, where the water is dried off in hot air (up to 350°C inlet) that also sinters/melts the polymer intricately diffused in between the glass fibers. After this step a continuous glass strand/wire is formed and cooled and has depending on the process conditions 10 to 30 percent by weight of non glass components (polymeric, additives). In a following step the continuous coated strand can be cut to specific size, typically 6 to 14.

The continuous glass strand/wire is sheet coated in a cable extrusion step with a polymeric component, blend, filled polymer, reactive, or functional polymer that may be similar or dissimilar from the polymer components in the previous process steps, to a glass content of the roving from 15% up to 70%. Optionally, this wire coated roving is pulled through a secondary oven section (similar to the previous oven section). The roving is then shaped and cooled, or cooled and cut to granules in a strand cutter, size depending of from 0.5cm up to 5cm in length. Shaping of the coated roving can be done by forcing several rovings through a heated shape die in a desired.

Creep is measured according to ASTM D2990.

Example 1 and Comparative Example 1

The dispersion tested in Example 1 contained as non-water ingredients the components listed in Table 1.

Table 1

| Components | Parts per hundred |
|---|---|
| polypropylene ethylene copolymer having a 44 MFR | 44 |
| low density polyethylene EAA copolymer | 14.7 |
| maleic anhydride grafted polypropylene wax | 14.7 |
| Carbon black | 1.2 |
| tris(2,4-ditert-butylphenyl)phosphite | 1.1 |
| pentaerythritol tetrakis(3(3,5-di-tert-butyl-4-hydroxyphenyl)propionate | 4.9 |
| octadecyl-3-(3,5-di-tert- butyl-4-hydroxyphenyl)-propionate | 0.55 |
| didodecyl-3,3'-thiodipropionate | 1.66 |
| Di methyl ethanol amine | 7 |

A dispersion of 100 parts by weight of the above ingredients in about 100 parts by weight of water is prepared as described above.

Two formulations are tested wherein the concentration of dimethyl ethanol amine as the acid neutralizer is up to 5 percent in the dispersion bath. In example 1 the four antioxidants are used in the recited amounts and in comparative example 1 none are present. Table 2 shows the test results for the two examples that differ only by the antioxidant mixture used. In Table 2 the samples contain 30 % by weight of glass fibers.

Table 2

| Example/ Antioxidant amount (active) and test results | Example 1 | Comparative Example 1 |
|---|---|---|
| AO1 ppm | 400 | 0 |
| AO2 ppm | 2000 | 0 |
| AO3 ppm | 300 | 0 |
| AO4 ppm | 450 | 0 |
| Ash % | 83 | 80.4 |
| Mixer ml 0 | 33 | 45 |
| Mixer ml10 | 36 | 90 |
| Cut quality | *** | ** |
| Tensile Modulus Mpa | 6650 | 5960 |
| Tensile at Break Mpa | 101 | 75.4 |
| Tensile elongation at break | 2.02 | 1.84 |
| Izod notched KJ/m$^2$ | 29.7 | 29.4 |

The mixer test comprises the agitation of coated glass bundle granules inside a coffee grinder type device that will beat around the granules at high speed in a small 100 ml size aluminum bowl. If the granule is not robust enough the glass fibers from inside the granule will be swirled out of the granules and create fluff and volume increase (in ml) of the material that is in the bowl. An increase in volume illustrates this effect. If the volume increase is low (<20ml delta) the granules are considered robust. The Ash test involves taking a known amount of sample, placing the weighed sample into a dried / preweighed porcelain crucible, burning away the polymer in an air atmosphere at temperatures above 500°C, and weighing the crucible after it is has been cooled to room temperature in a desiccator. The ash test is performed according to test ASTM D2584, D5630 or ISO 3451. Cut quality is determined by visual assessment as to whether the granules are nicely rod shaped and have a pristine cut surface. ** means ok but could be improved and *** means good.

These results illustrate that the addition of antioxidants is crucial for not only process and granulate quality but also for final material mechanical performance.

Examples 2 to 5

A number of pellets are formed by the process described Example 1 using the components described in Table 1. Molded parts are prepared after mixing with the granules of the coated glass bundles that contain 85% glass with in this case a homopolymer polypropylene polymer of melt flow rate 125 to provide the recited fiber percentage. Molded test specimens are prepared and tested. The differences in the formulations and the results of testing is provided in Table 3.

Table 3

| Example/ Variation - test | Example 2 | Example 3 | Example 4 | Example 5 |
|---|---|---|---|---|
| Color | Natural - none | Natural - none | Black | Black |
| % fibers | 30 | 40 | 30 | 40 |
| E-Modulus Mpa | 6650 | 8400 | 6200 | 8100 |
| Elongation break | 2.2 | 1.7 | 2.0 | |
| TsY N/mm$^2$ | 101 | 98 | 94 | 95 |
| Charpy Unnotched KJ/m$^2$ | 49 | | 47 | |

Color is provided using carbon black in the amount of 0.1 percent based on the final composition in a 30% glass containing part. The Unnotched Charpy is performed according to test ASTM D256. TsY is tensile strength at yield and performed according to test ISO 527-1, ISO 527-2.

Example 6

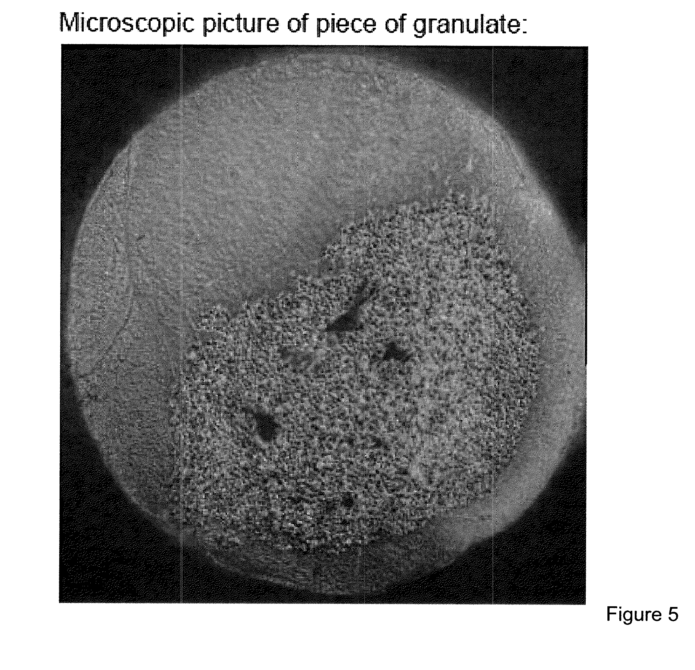

Coated fiber bundles prepared as described in Example 1 are passed through a wire coater containing a molten bath of a homopolymer of polypropylene having a melt flow rate of 950 to form a coating on the fiber bundles of the polypropylene homopolymer wherein ratio of the fraction of high melt flow rate polypropylene to the coated fiber bundles is varied. The results are compiled in Table 4. A micrograph of the cross-section of these fiber bundles wherein the fraction of high melt flow rate polypropylene to the glass fibers coated with the dispersion is 0.7 is shown in Figure 5. The volatiles for pellets prepared from these coated materials is about 66 ppm as measured by VOC testing.

Table 4

| glass + POD | high flow PP | Ratio | MFR |
|---|---|---|---|
| 0,353 | 0,582 | 1,65 | 602,95 |
| 0,353 | 0,518 | 1,47 | 402,67 |
| 0,353 | 0,453 | 1,28 | 280,07 |
| 0,353 | 0,388 | 1,10 | 201,37 |
| 0,353 | 0,324 | 0,92 | 148,85 |
| 0,353 | 0,259 | 0,73 | 112,62 |
| 0,353 | 0,194 | 0,55 | 86,93 |
| 0,353 | 0,129 | 0,37 | 68,28 |
| 0,353 | 0,065 | 0,18 | 54,45 |
| 0,353 | 0,000 | 0,00 | 44,00 |

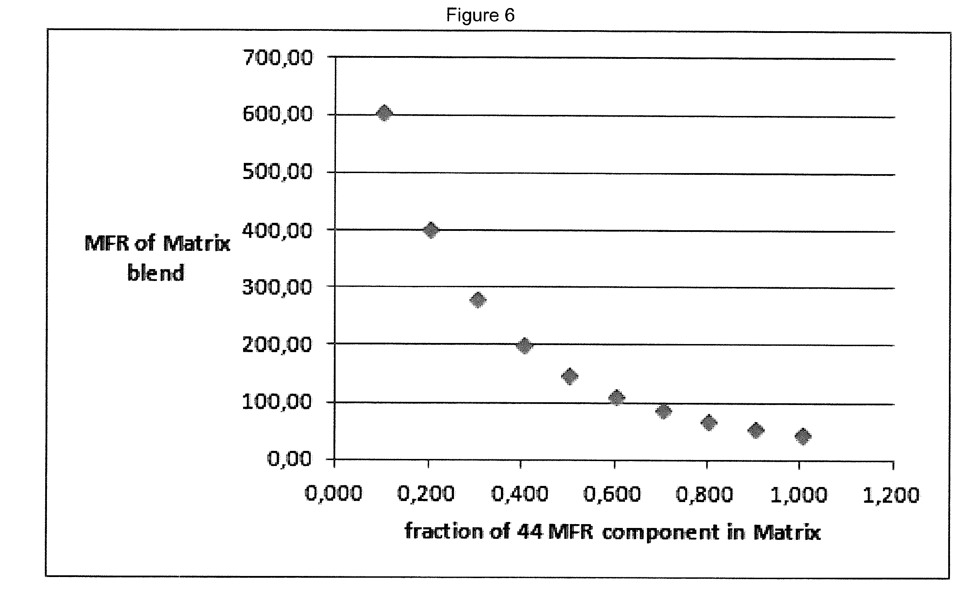

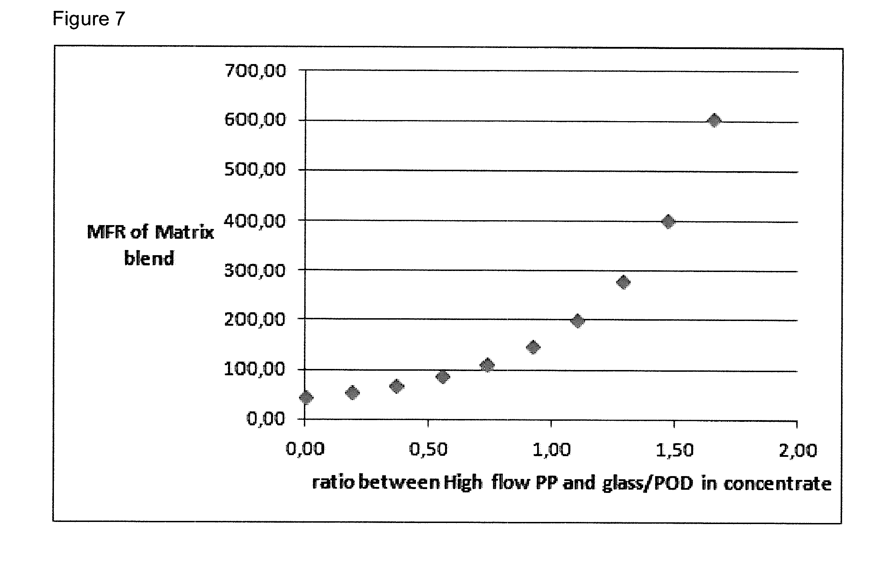

The results are illustrated by a graph of Melt Flow rate of the polymeric fraction of the matrix blend against weight fraction of 44 melt flow rate polypropylene in the blend, see Figure 6. Practically for producing the coated fibre bundles it is more useful to express the amount of high flow propylene polymer that needs to be wire coated onto the fiber bundles and dispersion polymers about them to reach a certain flow enhancing effect of the final polymeric matrix. Figure 7 shows a graph of the MFR of the total polymeric fraction versus the weight ratio of high flow polypropylene polymer wire coated onto the glass bundles and dispersion coated thereon.

Example 7

A polymeric dispersion is prepared comprising a mixture of a first dispersion and a second dispersion wherein the dispersions contain the non-water components listed in Table 5.

Table 5

| Components | How added | Parts |
|---|---|---|
| polypropylene ethylene copolymer having a 44 MFR | Dispersion 1 | 22 |
| low density polyethylene -with acrylic acid grafted thereto | Dispersion 1 | 14.7 |
| maleic anhydride grafted polypropylene wax | Dispersion 1 | 7.3 |
| homopolymer of polypropylene having a 950 MFR | Dispersion 1 | 11 |
| Plastomer/elastomer of polypropylene ethylene copolymer containing 16 mole percent of ethylene | Dispersion 1 | 11 |
| maleic anhydride grafted polypropylene having a molecular weight of about 20000 Mw | Dispersion 2 | 9.7 |
| Carbon black | After blending dispersions | 1.2 |
| tris(2,4-ditert-butylphenyl)phosphite | After blending dispersions | 1.1 |
| pentaerythritol tetrakis(3(3,5-di-tert-butyl-4-hydroxyphenyl)propionate | After blending dispersions | 4.9 |
| octadecyl-3-(3,5-di-tert- butyl-4-hydroxyphenyl)-propionate | After blending dispersions | 0.55 |
| didodecyl-3,3'-thiodipropionate | After blending dispersions | 1.66 |
| Hydrotalcite (synthetic magnesium aluminum hydroxide carbonate) | After blending dispersions | 0.55 |
| Di methyl ethanol amine | Inside dispersions | 7 |
| Water | Inside dispersions and After blending dispersions before blending solids into dispersions | 100 |

DMEA is inside the dispersion and is added in the extruder. DHT is added after the dispersions are blended and some extra water has been added. Glass concentrate pellets are prepared as described hereinbefore having a glass content of 85 percent by weight and a polymeric matrix content of 15 percent by weight. The glass concentrate pellets are blended with pellets of different polypropylene polymers to form a homogeneous mixture containing 30 percent glass fibers. Blended compositions are injection molded to form tensile test bars and the bars are tested for a variety of properties. Polypropylene 1 is a homopolymer having a meltflow rate of 150. Polypropylene 2 is a homopolymer having melt flow rate of 100. Polypropylene 3 is a homopolymer having melt flow rate of 40. Each formulation is tested at three different back pressures for injection molding

| Run | PP | BP | INJ s | INJ bar | OIT | T mod MPa | T yield MPa | Elongation % | Spec thick mm |
|---|---|---|---|---|---|---|---|---|---|
| 1 | 1 | 30 | 2.5 | 730 | 70.3 | 8570 | 93.6 | 1.5 | 1.4 |
| 2 | 1 | 40 | 2.5 | 741 | 65.9 | 8560 | 90.3 | 1.5 | 1.4 |
| 3 | 1 | 50 | 2.5 | 750 | 62.4 | 8615 | 86.4 | 1.4 | 1.4 |
| 4 | 2 | 30 | 2.6 | 820 | 51.9 | 8975 | 94.7 | 1.4 | 1.4 |
| 5 | 2 | 40 | 2.6 | 820 | 47.5 | 9080 | 89.9 | 1.3 | 1.4 |
| 6 | 2 | 50 | 2.6 | 826 | 53.0 | 8980 | 92.3 | 1.4 | 1.4 |
| 7 | 3 | 20 | 1.7 | 1081 | 68.1 | 7990 | 97.0 | 1.9 | 1.4 |
| 8 | 3 | 30 | 1.7 | 1105 | 62.0 | 7670 | 96.6 | 2.0 | 1.4 |
| 9 | 3 | 10 | 1.7 | 1063 | 65.1 | 7780 | 98.4 | 1.9 | 1.4 |
| 10 | 3 | 20 | 3.0 | 795 | 70.2 | 7880 | 99.9 | 2.0 | 2.0 |

(continued)

| Run | PP | BP | INJ s | INJ bar | OIT | T mod MPa | T yield MPa | Elongation % | Spec thick mm |
|---|---|---|---|---|---|---|---|---|---|
| 11 | 3 | 30 | 3.0 | 798 | 56.4 | 7685 | 99.0 | 2.1 | 2.0 |
| 12 | 1 | 30 | 3.1 | 584 | 60.5 | 7990 | 102.4 | 1.9 | 2.0 |
| | | | | | | | | | |

Back Pressure (BP) units are in bar. The formulations tested and the results of testing are illustrated in Table 6. OIT is Oxygen induction time. The results demonstrate broad applicability of the glass fiber bundle concentrate across a range of PP dilution flow, back pressures, and part thickness.

Example 8

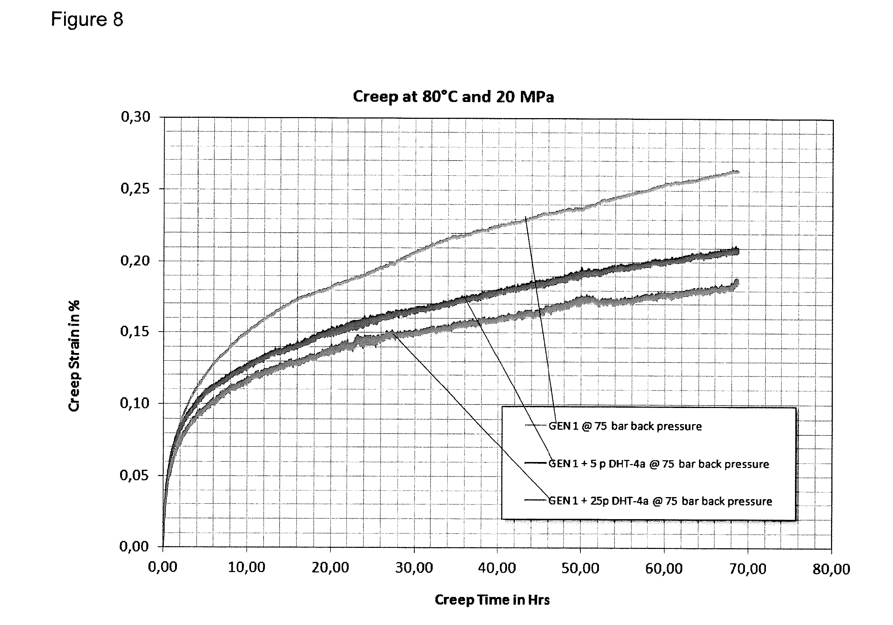

Three test specimens are prepared using the composition prepared in Example 1. One without hydrotalcite, one with 5ppm of hydrotalcite and one with 25 ppm of hydrotalcite. Hydrotalcite is added as 10% PP masterbatch in system. The Creep test is performed on the specimens. The results are illustrated in Figure 8. Tensile properties are measured for the samples and the data is provided in Table 7.

Table 7

| Test Units | Specimen Thickness mm | BP MPa | without hydrotalcite | 0.5 parts hydrotalcite | 2.5 parts hydrotalcite |
|---|---|---|---|---|---|
| TY MPa | 4 | 75 | 101.6 | 102.6 | 105.5 |
| Elongation% | 4 | 75 | 1.9 | 2.0 | 2.0 |
| Modulus MPa | 4 | 75 | 7640 | 7250 | 7570 |
| TY MPa | 1.5 | 75 | 101 | 104.5 | 98.4 |
| Elongation% | 1.5 | 75 | 1.9 | 1.9 | 1.9 |
| Modulus MPa | 1.5 | 75 | 7500 | 7750 | 7345 |
| TY MPa | 1.5 | 150 | 97.4 | 99.3 | 97 |
| Elongation% | 1.5 | 150 | 1.8 | 1.8 | 1.8 |
| Modulus MPa | 1.5 | 150 | 7565 | 7665 | 7220 |

The results in Table 7 illustrate that standard mechanical features are not adversely affected by the hydrotalcite, but that creep resistance is significantly improved

Example 9

Pellets of 85 percent glass fibers are prepared as described in Example 8. The pellets are blended with polypropylene and samples are molded from the blended mixture. The final fiber content is 30 percent. The samples are tested for a variety of properties and examined for fiber dispersion. The components of the dispersions are varied as described in Tables 8 and 9. The results of the testing are compiled in Table 10. In preparing the dispersions dispersion 1 and 2 are blended at a ratio of 80 parts dispersion 1 to 15 parts dispersion 2. The temperature of the oven that the coated fiber bundles are passed through is 210 °C. For admixing the dispersions and the additives a two step mixing procedure is used, in a first step a high shear rotary mixer is used, in a second step a micronisation mixer is used. To prepare the final dispersion dispersions 1 and 2 are mixed and then additional water is added. The parts of the dispersion constituents and additives as well as the water on a weight basis is provided in Table 10. In Table 10 and 11 addition 1 is addition with Dispersion 1, addition 2 is with dispersion 2, addition 3 is after blending dispersions and addition 4 is after blending dispersions and before adding additives.

Table 10

| Components | Addition | PV-A PPH | PV-E PPH | PV-V PPH | PV-X PPH | PV-G PPH | PV-I PPH |
|---|---|---|---|---|---|---|---|
| polypropylene ethylene copolymer having a 44 MFR | 1 | 0 | 0 | 0 | 0 | 0 | 0 |
| low density polyethylene -with acrylic acid grafted thereto | 1 | 14.6 | 14.6 | 14.7 | 14.7 | 14.8 | 14.8 |
| maleic anhydride grafted polypropylene wax | 1 | 14.6 | 14.6 | 14.7 | 14.7 | 14.8 | 14.8 |
| homopolymer of polypropylene having a 950 MFR | 1 | 22 | 22 | 22 | 22 | 22.2 | 22.2 |
| Plastomer/elastomer of polypropylene ethylene copolymer containing 16 mole present of ethylene | 1 | 22 | 22 | 22 | 22 | 22.2 | 22.2 |
| maleic anhydride grafted polypropylene having a molecular weight of 20k Mw | 2 | 9.65 | 9.65 | 9.65 | 9.65 | 9.74 | 9.74 |
| Carbon black | 3 | 1.28 | 1.28 | 1.47 | 1.47 | 1.1 | 1.1 |
| tris(2,4-ditert-butylphenyl)phosphite | 3 | 1.1 | 1.1 | 1.47 | 1.47 | 1.1 | 1.1 |
| pentaerythritol tetrakis(3(3,5-di-tert-butyl-4-hydroxyphenyl)propionate | 3 | 4.9 | 4.9 | 4.9 | 4.9 | 4.9 | 4.9 |
| octadecyl-3-(3,5-di-tert- butyl-4-hydroxyphenyl)-propionate | 3 | 0.55 | 0.55 | 0.55 | 0.55 | 0.55 | 0.55 |
| didodecyl-3,3'-thiodipropionate | 3 | 1.65 | 1.65 | 1.65 | 1.65 | 1.65 | 1.65 |
| Hydrotalcite (is there a more specific description of the one you used?) | 3 | 0.92 | 0.92 | 0.55 | 0.55 | 0 | 0 |
| Water (total of all parts exceeds 100) | 4 | 100 | 100 | 100 | 100 | 100 | 100 |

Table 11

| Components | Addition | PV-K PPH | PV-Q PPH | PV-AA PPH | PV-DD PPH | PV-S PPH | PV-U PPH |
|---|---|---|---|---|---|---|---|
| polypropylene ethylene copolymer having a 44 MFR | 1 | 0 | 0 | 0 | 0 | 0 | 0 |
| low density polyethylene -with acrylic acid grafted thereto | 1 | 14.6 | 14.6 | 14.6 | 14.6 | 14.75 | 14.75 |
| maleic anhydride grafted polypropylene wax | 1 | 14.6 | 14.6 | 14.6 | 14.6 | 14.75 | 14.75 |
| homopolymer of polypropylene having a 950 MFR | 1 | 0 | 0 | 0 | 0 | 0 | 0 |
| Plastomer/elastomer of polypropylene ethylene copolymer containing 16 mole present of ethylene | 1 | 43.8 | 43.8 | 43.9 | 43.9 | 44.3 | 44.3 |
| maleic anhydride grafted polypropylene having a molecular weight of 20k Mw | 2 | 9.65 | 9.65 | 9.65 | 9.65 | 9.73 | 9.73 |
| Carbon black | 3 | 1.28 | 1.28 | 1.47 | 1.47 | 1.3 | 1.3 |
| tris(2,4-ditert-butylphenyl)phosphite | 3 | 1.1 | 1.1 | 1.1 | 1.1 | 1.1 | 1.1 |
| pentaerythritol tetrakis(3(3,5-di-tert-butyl-4-hydroxyphenyl)propionate | 3 | 4.86 | 4.86 | 4.86 | 4.86 | 4.9 | 4.9 |

(continued)

| Components | Addition | PV-K PPH | PV-Q PPH | PV-AA PPH | PV-DD PPH | PV-S PPH | PV-U PPH |
|---|---|---|---|---|---|---|---|
| octadecyl-3-(3,5-di-tert- butyl-4-hydroxyphenyl)-propionate | 3 | 0.55 | 0.55 | 0.55 | 0.55 | 0.56 | 0.56 |
| didodecyl-3,3'-thiodipropionate | 3 | 1.65 | 1.65 | 1.65 | 1.65 | 1.67 | 1.67 |
| Hydrotalcite | 3 | 0.92 | 0.92 | 0.55 | 0.55 | 0 | 0 |
| Water | 4 | 100 | 100 | 100 | 100 | 100 | 100 |

| Sample/ Test-Parameter | 1 pva | 2 pve | 3 pvv | 4 pvx | 5 pvg | 6 pvi | 7 pvk | 8 pvq | 9 pvaa | 10 pvdd | 11 pvs | 12 pvu |
|---|---|---|---|---|---|---|---|---|---|---|---|---|
| Dispersion /water vol % | 60/ 40 | | 70/ 30 | | 60/ 40 | | 60/ 40 | | 70/ 30 | | 60/ 40 | |
| Carbon Black % solids | .70 | | .80 | | .60 | | .70 | | .80 | | .70 | |
| Hydrotalcit e % | .50 | | .30 | | 0 | 0 | .50 | | .30 | | 0 | |
| Puller speed | 12 | 20 | 12 | 20 | 12 | 20 | 12 | 25 | 12 | 25 | 12 | 20 |
| Blender test 10 sec ml | 35 | 37 | 39 | 39 | 35 | 35 | 34 | 38 | | | 32 | 33 |
| Tensile yield/ break MPa | 104.6 | 107.4 | 100.6 | 102.2 | 106.1 | 105.6 | 90.4 | 88.4 | 92.5 | 90.4 | 96.4 | 96.5 |
| Tensile E@Y/B % | 2.4 | 2.4 | 2.4 | 2.4 | 2.4 | 2.4 | 2.4 | 2.2 | 2.4 | 2.3 | 2.3 | 2.2 |
| Tensile Modulus | 6795 | 6960 | 6415 | 6485 | 6800 | 6895 | 600 5 | 602 0 | 590 5 | 620 0 | 636 0 | 6425 |
| Heat ageing passes 1000hrs at | 150C | 150C | 140C | 140C | 130C | 130C | 150 C | 150 C | 140 C | 140 C | 130 C | 130 C |
| Hard Clusters In 1 mm plaque | >10 | >5 | >10 | >5 | 5 | <5 | >>2 0 | >>2 0 | >>2 0 | >>2 0 | >10 | >10 |
| Soft Clusters In 1 mm plaque | >10 | >10 | >10 | >10 | >10 | >10 | >>2 0 | >>2 0 | >>2 0 | >>2 0 | >10 | >10 |

Table 11 illustrates that a propylene homopolymer component in the dispersion improves mechanical properties such as tensile Yield and cluster performance (reducing clusters), DHT improves ageing performance of the materials, with 0.5 DHT 1000 hrs at 150C is reached, with 0.3 DHT 1000 hrs at 140C is reached, with 0 DHT 1000 hrs at 130C is reached.

Parts by weight as used herein refers to 100 parts by weight of the composition specifically referred to. Any numerical values recited in the above application include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value, and the highest value enumerated are to be considered to be expressly stated in this application in a similar manner. Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints. The term "consisting essentially of" to describe a combination shall include the elements, ingredients, components or steps identified, and such other elements ingredients, components or steps that do not materially affect the basic and novel characteristics of the combination. The use of the terms "comprising" or "including" to describe combinations of elements, ingredients, components or steps herein also contemplates embodiments that consist essentially of the elements, ingredients, components or steps. Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps.

**Claims**

1.  A composition comprising:

    a polymeric matrix comprising one or more polyolefins, one or more hindered phenol antioxidants, one or more phosphite antioxidants and one or more acid neutralizers;
    one or more bundles of fibers;
    wherein the bundles of fibers are disposed within the polymeric matrix.

2.  A composition according to Claim 1 wherein the acid neutralizer comprises one or more volatile nitrogen containing compounds.

3.  A composition according to Claim 1 or 2 wherein the polymeric matrix includes one or more thioester antioxidants.

4.  A composition according to any one of Claims 1 to 3 wherein the polymeric matrix includes one or more polyolefins with maleic anhydride or a hydrolysis product thereof grafted to the backbone.

5.  A composition according to Claim 4 wherein the one or more polyolefins with maleic anhydride or a hydrolysis product thereof grafted to the backbone exhibits a weight average molecular weight of about 20,000 to about 40,000 daltons and contain about 0.5 to about 3.5 percent by weight of maleic anhydride or a hydrolysis product thereof.

6.  A composition according Claim 4 or 5 wherein the polymeric matrix contains from about 5 to about 15 percent by weight of one or more polyolefins with maleic anhydride or a hydrolysis product thereof grafted to the backbone.

7.  A composition comprising a plurality of bundles of fibers according to any one of the preceding claims wherein the bundles of fibers are oriented in one direction and are bonded together such that bonded together bundles exhibit a consistent shape transverse to the direction of orientation.

8.  A composition according to any one of the preceding claims wherein the composition comprises about 20 to about 95 percent by weight of fibers and preferably about 75 to about 91 percent by weight of fibers.

9.  A composition according to any one of claims 1 to 8 wherein the polymeric matrix comprises:

from about 95.7 to about 99.96 percent by weight of one or more polyolefins;
from about 0.01 to about 1.0 percent by weight of one or more hindered phenol antioxidants;
from about 0.01 to about 0.1 percent by weight of one or more phosphite antioxidants;
from about 0.01 to about 0.2 percent by weight of one or more thioester antioxidants;
and
from about 0.01 to about 3.0 percent by weight of one or more acid neutralizers.

10. A composition according to any one of the preceding claims wherein the one or more bundles of fibers having a polymeric matrix disposed about the bundles have coated about polymeric matrix a thermoplastic composition.

11. A composition according to Claim 14 wherein the thermoplastic composition coated about the polymeric matrix comprises a polyolefin having a melt flow rate of 70 or greater.

12. A composition according to Claim 15 wherein polyolefin having a melt flow rate of 70 or greater is uncracked or prepared using metallocene catalysts.

13. A composition according to any one of claims 1 to 12 wherein the composition comprises:

from about 30 to 90 percent by weight of a polymeric matrix, containing one or more bundles of fibers containing from about 70 to about 91 percent by weight of fibers and
from about 9 to about 30 percent by weight of the polymeric matrix based on the weight of the polymeric matrix and the bundles of fibers; and
from about 10 to about 70 percent by weight of thermoplastic composition disposed about the polymeric matrix and the bundles of fibers wherein the percentages are based on the weight of the polymeric matrix, the bundles of fibers and the thermoplastic composition.

14. A method comprising

a) passing one or more bundles of fibers through a dispersion in water of a composition comprising one or more polyolefins, one or more hindered phenol antioxidants, one or more phosphite antioxidants and one or more acid neutralizers so as to form a polymeric matrix about the bundle of fibers;
b) passing the polymeric matrix and bundles of fibers through an oven to volatilize away the volatile components of the dispersion; and
c) cutting the polymeric matrix and the bundles of fibers into a desired length.

15. A method according to Claim 14 wherein the plurality of bundles of fibers is passed through a die as they exit the dispersion to shape the plurality of bundles in the direction transverse to the orientation of the fibers and the polymeric matrix and bundles of fibers are bonded together in the formed shape in the oven.

16. A method according Claim 14 or 15 wherein after exiting the oven a thermoplastic composition is coated on the polymeric matrix disposed on the bundles of fibers; the polymeric matrix and bundles of fibers are then passed through a second oven to bond the thermoplastic matrix to the polymeric matrix; and the bundle of fibers is cut into the desired length.

17. A method according to Claim 14 to 16 wherein the bundles of fibers are passed through a second dispersion comprising water and one or more polyolefins with maleic anhydride or a hydrolysis product thereof grafted to the backbone, wherein the bundles can be passed through the dispersion and the second dispersion in any order.

Figure 1

Figure 2

EP 3 133 107 A1

Figure 3

Figure 4

Microscopic picture of piece of granulate:

Figure 5

Figure 6

EP 3 133 107 A1

Figure 7

EP 3 133 107 A1

Figure 8

Creep at 80°C and 20 MPa

GEN 1 @ 75 bar back pressure

GEN 1 + 5 p DHT-4a @ 75 bar back pressure

GEN 1 + 25p DHT-4a @ 75 bar back pressure

Creep Time in Hrs

EP 3 133 107 A1

Europäisches
Patentamt

European
Patent Office

Office européen
des brevets

# EUROPEAN SEARCH REPORT

Application Number

EP 15 18 1364

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2013/190434 A1 (ZAHALKA HAYDER [US]) 25 July 2013 (2013-07-25) * paragraphs [0020], [0072], [0073] * ----- | 1-17 | INV. C08J5/04 C08J5/06 C08J5/10 |
| Y | WO 2008/051756 A2 (DOW GLOBAL TECHNOLOGIES INC [US]; MAGLEY DAVID J [US]; MONCLA BRAD M []) 2 May 2008 (2008-05-02) * paragraphs [0002], [0004] * ----- | 1-17 | |
| A | US 2008/176968 A1 (VANSUMEREN MARK W [US] ET AL) 24 July 2008 (2008-07-24) * paragraph [0009] * ----- | 1,14 | |
| Y | EP 1 027 973 A1 (CHISSO CORP [JP]) 16 August 2000 (2000-08-16) * sentences 39-41, paragraph 5 * ----- | 1,14 | |

TECHNICAL FIELDS
SEARCHED      (IPC)

C08J

The present search report has been drawn up for all claims

| Place of search | Date of completion of the search | Examiner |
|---|---|---|
| Munich | 12 February 2016 | Schweissguth, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

....................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 18 1364

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2016

| Patent document cited in search report | | Publication date | Patent family member(s) | | Publication date |
|---|---|---|---|---|---|
| US 2013190434 | A1 | 25-07-2013 | CN 104053715 A | | 17-09-2014 |
| | | | EP 2804901 A1 | | 26-11-2014 |
| | | | US 2013190434 A1 | | 25-07-2013 |
| | | | WO 2013109818 A1 | | 25-07-2013 |
| WO 2008051756 | A2 | 02-05-2008 | AU 2007309278 A1 | | 02-05-2008 |
| | | | BR PI0715992 A2 | | 06-08-2013 |
| | | | CA 2667283 A1 | | 02-05-2008 |
| | | | EP 2083979 A2 | | 05-08-2009 |
| | | | EP 2433772 A1 | | 28-03-2012 |
| | | | JP 2010506823 A | | 04-03-2010 |
| | | | KR 20090082230 A | | 29-07-2009 |
| | | | RU 2009118932 A | | 27-11-2010 |
| | | | TW 200831569 A | | 01-08-2008 |
| | | | US 2008118728 A1 | | 22-05-2008 |
| | | | WO 2008051756 A2 | | 02-05-2008 |
| US 2008176968 | A1 | 24-07-2008 | NONE | | |
| EP 1027973 | A1 | 16-08-2000 | CN 1282288 A | | 31-01-2001 |
| | | | DE 69807732 D1 | | 10-10-2002 |
| | | | DE 69807732 T2 | | 14-08-2003 |
| | | | EP 1027973 A1 | | 16-08-2000 |
| | | | JP 4221900 B2 | | 12-02-2009 |
| | | | US 6676870 B1 | | 13-01-2004 |
| | | | WO 9920446 A1 | | 29-04-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6818698 B
- US 5437928 A
- US 5891284 A
- US 5972166 A
- US 2008118728 A
- US 7803865 B
- US 3645992 A, Elston
- US 4076698 A, Anderson
- US 5272236 A
- US 5278272 A
- US 5504172 A
- WO 0001745 A
- US 8916640 B
- US 4762890 A
- US 4927888 A
- US 4950541 A
- US 4599392 A
- US 4988781 A
- US 5938437 A

**Non-patent literature cited in the description**

- **GREG SAUNDERS ; BEN MACCREATH.** Analysis of Polyolefins by GPC/;SEC Application Compendium. Agilent Technologies, Inc, 2011